(19) Europäisches Patentamt / European Patent Office / Office européen des brevets

(11) **EP 4 761 345 A1**

(12) **EUROPEAN PATENT APPLICATION**
published in accordance with Art. 153(4) EPC

(43) Date of publication:
**17.06.2026 Bulletin 2026/25**

(21) Application number: **24870900.8**

(22) Date of filing: **26.09.2024**

(51) International Patent Classification (IPC):
*H04W 28/06* (2009.01)

(52) Cooperative Patent Classification (CPC):
**H04W 4/021; H04W 28/06; H04W 36/00;
H04W 36/08**

(86) International application number:
**PCT/CN2024/121531**

(87) International publication number:
**WO 2025/067361 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.09.2023 CN 202311287423**

(71) Applicant: HUAWEI TECHNOLOGIES CO., LTD.
**Shenzhen 518129 (CN)**

(72) Inventors:
• WANG, Yu
  Shenzhen, Guangdong 518129 (CN)
• WANG, Jun
  Shenzhen, Guangdong 518129 (CN)
• QIAO, Yunfei
  Shenzhen, Guangdong 518129 (CN)
• DU, Yinggang
  Shenzhen, Guangdong 518129 (CN)

(74) Representative: MERH-IP Matias Erny Reichl
Hoffmann
Patentanwälte PartG mbB
Paul-Heyse-Straße 29
80336 München (DE)

(54) **COMMUNICATION METHOD AND APPARATUS**

(57)     This application provides a communication method and apparatus, and relates to the field of communication technologies. The method includes: A terminal device receives a region parameter, where the region parameter indicates a quantity N of regions, and N is any positive integer. The terminal device determines a reference location of a first region based on the region parameter and a first mapping relationship, where the first mapping relationship indicates a conversion relationship between the reference location of the first region and the region parameter, and the first region is one of the N regions.

1300

```
Terminal device                                    Network device

          S1301: Region parameter,
  where the region parameter indicates a quantity N of regions
        ◄─────────────────────────────────────────

  S1302: Determine a reference location of a first region based on the
         region parameter and a first mapping relationship,
         where the first mapping relationship indicates a conversion
         relationship between the reference location of the first region and
         the region parameter, and the first region is one of the N regions
```

FIG. 13

EP 4 761 345 A1

**Description**

This application claims priority to Chinese Patent Application No. 202311287423.1, filed with the China National Intellectual Property Administration on September 28, 2023 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

In a satellite communication system, coverage of a satellite beam is based on a region. For example, the satellite beam covers one or more regions within a period of time. If a terminal device is located in the region covered by the satellite beam, the terminal device can be served by the satellite beam for communication. On the contrary, if the terminal device is located outside the region covered by the satellite beam, the terminal device cannot perform communication.

However, a region determining process is not provided in the current technology, affecting communication effectiveness.

**SUMMARY**

To resolve the foregoing technical problem, this application provides a communication method and apparatus, so that a terminal device can determine a region covered by a satellite beam. This helps improve communication effectiveness.

To achieve the foregoing objective, the following technical solutions are used in this application.

According to a first aspect, a communication method is provided. The method may be performed by a terminal device. The terminal device may be the terminal device, or may be a processor, a module, a chip, a chip system, or the like that is in the terminal device and that implements the method. The method includes: receiving a region parameter, where the region parameter indicates a quantity N of regions, and N is any positive integer; and determining a reference location of a first region based on the region parameter and a first mapping relationship. The first mapping relationship indicates a conversion relationship between the reference location of the first region and the region parameter, and the first region is one of the N regions.

In this way, because the first mapping relationship can indicate the conversion relationship between the reference location of the first region and the region parameter, when the terminal device receives the region parameter, the terminal device may determine the reference location of the first region based on the received region parameter and the first mapping relationship, thereby laying a foundation for the terminal device to perform communication based on the reference location of the first region. For example, the first region is an active region of a network device. If the terminal device is located in the first region, the terminal device may communicate with the network device, thereby improving communication effectiveness.

In a possible design, the region parameter includes a region radius or the quantity of regions.

For example, the region parameter includes the region radius, and the region radius and the quantity of regions satisfy the following formula:

$$N_{spot} = \frac{8\pi R_e^2}{3\sqrt{3}R_{spot}^2}$$

$N_{spot}$ represents the quantity of regions, $R_{spot}$ represents the region radius, and $R_e$ represents a parameter of a spherical surface on which the $N_{spot}$ regions are located.

In a possible design, the method further includes: obtaining a location of the terminal device. Determining the reference location of the first region based on the region parameter and the first mapping relationship includes: determining the reference location of the first region based on the location of the terminal device, the region parameter, and the first mapping relationship. The first region is a region in which the terminal device is located.

In this way, the terminal device may determine, based on the location of the terminal device and with reference to the region parameter and the first mapping relationship, the reference location of the region in which the terminal device is located, thereby laying a foundation for the terminal device to perform communication based on the region in which the terminal device is located.

In a possible design, the method further includes: obtaining a region identifier. Determining the reference location of the first region based on the region parameter and the first mapping relationship includes: determining the reference location of the first region based on the region identifier, the region parameter, and the first mapping relationship. The first region is a region corresponding to the region identifier.

In this way, the terminal device may determine, based on the region identifier and with reference to the region parameter and the first mapping relationship, the reference location of the region corresponding to the region identifier, thereby laying a foundation for the terminal device to perform communication based on the region corresponding to the region identifier.

In a possible design, the region includes at least one of the following types: a broadcast region, a service region, or a region corresponding to a tracking area. The broadcast region is a geographic region covered by a broadcast beam. The service region is a geographic region covered by a service beam.

In a possible design, the first mapping relationship satisfies:

$$RL(i) = R_e \times (\cos \varphi_i \sin \theta_i, \sin \varphi_i \sin \theta_i, \cos \theta_i)$$

$$\varphi_i = 2\pi \left[ \frac{2i}{1 + \sqrt{5}} \right]$$

$$\theta_i = \cos^{-1}\left( 1 - \frac{2i + 1}{N_{spot}} \right)$$

RL(i) represents three-dimensional coordinates corresponding to the reference location of the first region, $i$ represents the region identifier of the first region, $i$ is a nonnegative integer less than $N_{spot}$, $R_e$ represents a parameter of a spherical surface on which the first region is located, $N_{spot}$ represents the quantity of regions, and [ ] represents an operator for taking a fractional part.

In this application, the region identifier may include a region label. The region label may also be referred to as a region number. $i$ may be a region label of the first region, and is used to identify the first region.

In a possible design, the first mapping relationship satisfies:

$$RL(i) = R_e \times (\sqrt{1 - z_i^2} \cos 2\pi i\, \emptyset, \sqrt{1 - z_i^2} \sin 2\pi i\, \emptyset, z_i)$$

$$z_i = \frac{2i - 1}{N_{spot}} - 1$$

$$\emptyset = \frac{1 + \sqrt{5}}{2}$$

*RL(i)* represents three-dimensional coordinates corresponding to the reference location of the first region, *i* represents the region identifier of the first region, *i* is a nonnegative integer less than $N_{spot}$, $R_e$ represents a parameter of a spherical surface on which the first region is located, and $N_{spot}$ represents the quantity of regions.

In a possible design, the first mapping relationship satisfies:

$$RL(i) = (lon(i), lat(i))$$

$$lon(i) = sin^{-1}\left(\frac{2i}{2N + 1}\right)$$

$$lat(i) = 2\pi i \emptyset^{-1}$$

$$N_{spot} = 2N + 1$$

$$\emptyset = \frac{1 + \sqrt{5}}{2}$$

*RL*(*i*) represents the reference location of the first region, *lon*(*i*) represents a longitude corresponding to the reference location of the first region, *lat*(*i*) represents a latitude corresponding to the reference location of the first region, *i* represents the region identifier of the first region, *i* is a nonnegative integer less than $N_{spot}$, and $N_{spot}$ represents the quantity of regions.

In a possible design, the region is the broadcast region, the first region is the region in which the terminal device is located, and the method further includes: receiving access information, where the access information includes an access configuration corresponding to the first region; and initiating random access based on the access configuration corresponding to the first region.

In this way, the network device indicates a region-level access configuration (for example, the access configuration of the first region) to the terminal device. If the region in which the terminal device is located is the first region, the terminal device initiates random access based on the access configuration of the region in which the terminal device is located, thereby reducing signaling overheads.

In a possible design, the region is the service region, the first region is the region in which the terminal device is located, and the method further includes: receiving service resource information, where the service resource information indicates a communication resource configuration corresponding to the first region; and performing service transmission based on the communication resource configuration corresponding to the first region.

In this way, the network device indicates a region-level communication resource configuration (for example, the communication resource configuration of the first region) to the terminal device. If the region in which the terminal device is located is the first region, the terminal device performs service transmission based on the communication resource configuration of the region in which the terminal device is located, thereby reducing signaling overheads.

In a possible design, the first region is the region in which the terminal device is located, and the method further includes: receiving first information, where the first information indicates that the first region is an active region; and initiating communication based on the first information.

In this way, the network device indicates an active region (for example, the first region is the active region) to the terminal device, and the terminal device determines, based on whether the region in which the terminal device is located is an active region, whether to initiate communication, thereby reducing signaling overheads.

In a possible design, before receiving the first information, the method further includes: receiving second information, where the second information indicates a first elevation angle; and when an elevation angle at the reference location of the first region is greater than or equal to the first elevation angle, determining that the first region is a service region of the network device, where the active region is one or more of service regions of the network device.

In this way, when the network device indicates the first elevation angle to the terminal device, if the region in which the terminal device is located is the first region, the terminal device determines, based on the elevation angle at the reference location of the region in which the terminal device is located and the first elevation angle, whether the region in which the terminal device is located is a service region of the network device. If the region in which the terminal device is located is the service region of the network device, the terminal device has a possibility of initiating communication.

In a possible design, the first information is carried in one of the following: radio resource control RRC signaling, downlink control information DCI, or a medium access control-control element MAC-CE.

In a possible design, the first information further indicates a time period in which the first region is the active region, so that the terminal device initiates communication within the effective time period of the first region.

In a possible design, a time period in which the first region is the active region is preconfigured, to reduce signaling overheads.

In a possible design, the method further includes: receiving third information, where the third information indicates a second elevation angle; and triggering neighboring cell measurement based on an elevation angle at the reference location of the first region and the second elevation angle, where a result of the neighboring cell measurement is used for cell handover or cell reselection.

In this way, the network device indicates the second elevation angle to the terminal device. If the reference location of the first region is a reference point (that is, the network device indicates, by using the region identifier, that the reference location of the first region is the reference point, or the first region is a reference region, that is, a region corresponding to the reference point, or the first region is the region in which the terminal device is located), the terminal device determines, based on the elevation angle at the reference location of the first region and the second elevation angle, whether to trigger neighboring cell measurement, so that signaling overheads are low.

In a possible design, the method further includes: triggering neighboring cell measurement based on the reference location of the first region and a location of the terminal device, where a result of the neighboring cell measurement is used for cell handover or cell reselection.

In this way, if the reference location of the first region is a reference point (that is, the network device indicates, by using the region identifier, that the reference location of the first region is the reference point, or the first region is a reference region, that is, a region corresponding to the reference point), the terminal device determines, based on the reference location of the first region and the location of the terminal device, whether to trigger neighboring cell measurement, so that signaling overheads are low.

In a possible design, the region is the region corresponding to the tracking area, the first region is the region in which the terminal device is located, and the method further includes: receiving fourth information, where the fourth information indicates at least one of the N regions; and initiating tracking area update when the at least one region does not include the first region.

In this way, the network device broadcasts the fourth information. Because the fourth information can indicate a region covered by a beam of the network device, the terminal device determines, based on whether the region in which the terminal device is located is the region indicated by the fourth information, whether to initiate tracking area update, thereby helping reduce signaling overheads.

In a possible design, the fourth information includes an identifier of each of the at least one region, so that signaling overheads are low.

In a possible design, the fourth information includes an identifier of a second region and a first parameter, the second region is one of the at least one region, and the first parameter indicates a quantity of the at least one region, so that signaling overheads are low.

In a possible design, the region parameter is associated with fifth information, the fifth information indicates time within which the region parameter takes effect or a geographic region in which the region parameter takes effect, and the geographic region includes the N regions.

For example, the fifth information indicates the time within which the region parameter takes effect.

If the fifth information indicates a first time period, the region parameter is associated with the first time period. This is specifically reflected as that in the first time period, a region radius of each of the N regions is a region radius 1.

If the fifth information indicates a second time period, the region parameter is associated with the second time period. This is specifically reflected as that in the second time period, a region radius of each of the N regions is a region radius 2.

In this way, the region radius is set based on service load statuses in different time periods, thereby helping reduce signaling overheads. For example, in a time period in which service load is heavy, the region radius is set to be small, thereby helping reduce paging signaling overheads. On the contrary, in a time period in which service load is light, the region radius is set to be large, and the terminal device does not need to frequently initiate tracking area update, thereby helping reduce signaling overheads.

For another example, the fifth information indicates the geographic region in which the region parameter takes effect.

If the fifth information indicates a first geographic region, the region parameter is associated with the first geographic region. This is specifically reflected as that in the first geographic region, a region radius of each of the N regions is a region radius 3.

If the fifth information indicates a second geographic region, the region parameter is associated with the second geographic region. This is specifically reflected as that in the second geographic region, a region radius of each of the N regions is a region radius 4.

In this way, the region radius is set based on service load statuses in different geographic regions, thereby helping reduce signaling overheads. For example, in a geographic region in which service load is heavy, the region radius is set to be small, thereby helping reduce paging signaling overheads. On the contrary, in a geographic region in which service load is light, the region radius is set to be large, and the terminal device does not need to frequently initiate tracking area update, thereby helping reduce signaling overheads.

In a possible design, the method further includes: obtaining a first threshold; and initiating tracking area update when a distance between a location of the terminal device and the reference location of the first region is greater than or equal to the first threshold.

In this way, the terminal device obtains the first threshold. If the reference location of the first region is a reference point (that is, the network device indicates, by using the region identifier, that the reference location of the first region is the reference point, or the first region is a reference region, that is, a region corresponding to the reference point), the terminal device determines, based on the reference location of the first region, the location of the terminal device, and the first threshold, whether to initiate tracking area update. The network device does not need to broadcast a tracking area code TAC list, thereby helping reduce broadcast signaling overheads.

According to a second aspect, a communication method is provided. The method may be performed by a network device. The network device may be the network device, or may be a processor, a module, a chip, a chip system, or the like that is in the network device and that implements the method. The method includes: determining a region parameter, where the region parameter indicates a quantity N of regions, and N is any positive integer; and sending the region parameter, where the region parameter is used to determine a reference location of a first region, and the first region is one of the N regions.

In a possible design, the region parameter includes a region radius or the quantity of regions.

In a possible design, the region includes at least one of the following types: a broadcast region, a service region, or a region corresponding to a tracking area. The broadcast region is a geographic region covered by a broadcast beam. The service region is a geographic region covered by a service beam.

In a possible design, the method further includes: sending a region identifier, where the region identifier is an identifier of the first region, and the region identifier is used to determine the reference location of the first region.

In a possible design, the method further includes: sending access information, where the access information includes an access configuration corresponding to the first region, and the access configuration corresponding to the first region is used to initiate random access.

In a possible design, the method further includes: sending service resource information, where the service resource information indicates a communication resource configuration corresponding to the first region, and the communication resource configuration corresponding to the first region is used to perform service transmission.

In a possible design, the method further includes: sending first information, where the first information indicates that the first region is an active region.

In a possible design, the first information is carried in one of the following: radio resource control RRC signaling, downlink control information DCI, or a medium access control-control element MAC-CE.

In a possible design, the first information further indicates a time period in which the first region is the active region.

In a possible design, a time period in which the first region is the active region is preconfigured.

In a possible design, before sending the first information, the method further includes: sending second information, where the second information indicates a first elevation angle, the first elevation angle is used to determine whether the first region is a service region of the network device, and the active region is one or more of service regions of the network device.

In a possible design, the first information further indicates a time period in which the first region is the active region. Alternatively, a time period in which the first region is the active region is preconfigured.

In a possible design, the method further includes: sending third information, where the third information indicates a second elevation angle, the second elevation angle is used to determine whether to trigger neighboring cell measurement, and a result of the neighboring cell measurement is used for cell handover or cell reselection.

In a possible design, the method further includes: sending fourth information, where the fourth information indicates at least one of the N regions, and the fourth information is used to determine whether to initiate tracking area update.

In a possible design, the fourth information includes an identifier of each of the at least one region.

In a possible design, the fourth information includes an identifier of a second region and a first parameter, the second region is one of the at least one region, and the first parameter indicates a quantity of the at least one region.

In a possible design, the region parameter is associated with fifth information, the fifth information indicates time within which the region parameter takes effect or a geographic region in which the region parameter takes effect, and the geographic region includes the N regions.

In a possible design, the method further includes: sending indication information of a first threshold, where the first threshold is used to determine whether to initiate tracking area update.

According to a third aspect, a communication apparatus is provided, configured to implement various methods. The communication apparatus may be the terminal device in the first aspect, or an apparatus, for example, a chip or a chip system, included in the terminal device. Alternatively, the communication apparatus may be the network device in the second aspect, or an apparatus, for example, a chip or a chip system, included in the network device.

The communication apparatus includes a corresponding module, unit, or means (means) for implementing the method. The module, unit, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and any possible implementation of the foregoing aspects. The transceiver module may include a receiving module and a sending module that are respectively configured to implement a receiving function and a sending function in any one of the foregoing aspects and any possible implementation of the foregoing aspects.

In some possible designs, the transceiver module may include a transceiver circuit, a transceiver machine, a transceiver, or a communication interface.

According to a fourth aspect, a communication apparatus is provided, and includes a processor and a memory. The memory is configured to store computer instructions, and when the processor executes the instructions, the communication apparatus is enabled to perform the method according to any aspect. The communication apparatus may be the terminal device in the first aspect, or an apparatus, for example, a chip or a chip system, included in the terminal device. Alternatively, the communication apparatus may be the network device in the second aspect, or an apparatus, for example, a chip or a chip system, included in the network device.

According to a fifth aspect, a communication apparatus is provided, including a processor and a communication interface. The communication interface is configured to communicate with a module outside the communication apparatus. The processor is configured to execute a computer program or instructions, to enable the communication apparatus to perform the method according to any aspect. The communication apparatus may be the terminal device in the first aspect, or an apparatus, for example, a chip or a chip system, included in the terminal device. Alternatively, the communication apparatus may be the network device in the second aspect, or an apparatus, for example, a chip or a chip system, included in the network device.

According to a sixth aspect, a communication apparatus is provided, including at least one processor. The processor is configured to execute a computer program or instructions stored in a memory, to enable the communication apparatus to perform the method according to any aspect. The memory may be coupled to the processor, or may be independent of the processor. The communication apparatus may be the terminal device in the first aspect. Alternatively, the communication apparatus may be the network device in the second aspect.

According to a seventh aspect, a computer-readable storage medium is provided. The computer-readable storage medium stores a computer program or instructions. When the computer program or the instructions are run on a communication apparatus, the communication apparatus is enabled to perform the method according to any one of the first aspect and the possible designs of the first aspect.

According to an eighth aspect, a computer program product including instructions is provided. When the computer program product runs on a communication apparatus, the communication apparatus is enabled to perform the method according to any one of the first aspect and the possible designs of the first aspect.

According to a ninth aspect, a communication apparatus is provided (for example, the communication apparatus may be a chip or a chip system). The communication apparatus includes a processor, configured to implement the function in any one of the first aspect and the possible designs of the first aspect, or configured to implement the function in any one of the second aspect and the possible designs of the second aspect.

In some possible designs, the communication apparatus includes a memory, and the memory is configured to store necessary program instructions and data.

In some possible designs, when the apparatus is a chip system, the apparatus may include a chip, or may include a chip and another discrete component.

According to a tenth aspect, a communication system is provided. The communication system includes a terminal device and a network device. The terminal device is configured to perform the method in any one of the first aspect or the possible designs of the first aspect, and the network device is configured to perform the method in any one of the second aspect or the possible designs of the second aspect.

It may be understood that when the communication apparatus provided in any one of the third aspect to the tenth aspect is a chip, a sending action/function of the communication apparatus may be understood as outputting information, and a receiving action/function of the communication apparatus may be understood as inputting information.

For technical effects brought by any one of the designs of the second aspect to the tenth aspect, refer to the technical effects brought by different designs of the first aspect. Details are not described herein again.

## BRIEF DESCRIPTION OF DRAWINGS

FIG. 1 is a diagram of an architecture of a satellite network in a transparent mode according to this application;

FIG. 2 is a diagram of an architecture of a satellite network in a regenerative mode according to this application;

FIG. 3 is a diagram of an architecture of a satellite network in another regenerative mode according to this application;

FIG. 4 is a diagram of an architecture of a satellite network in another regenerative mode according to this application;

FIG. 5 is a diagram of a network architecture with convergence of an NTN and a terrestrial network according to this application;

FIGS. 6A-6B are diagrams of beam coverage areas in an earth-moving mode and an earth-fixed mode in an NTN according to this application;

FIGS. 7A-7B are diagrams of a mapping relationship between a beam of a network device and a region according to this application;

FIGS. 8A-8B are diagrams of a projection of a beam on the ground according to this application;

FIG. 9 shows a region description manner based on an H3 geographic grid according to this application;

FIG. 10 is a diagram of a group handover scenario according to this application;

FIG. 11 is a schematic flowchart of cell handover according to this application;

FIG. 12 is a schematic flowchart of beam management according to this application;

FIG. 13 is a schematic flowchart of a communication method according to this application;

FIG. 14 is a schematic flowchart of another communication method according to this application;

FIG. 15 is a schematic flowchart of another communication method according to this application;

FIG. 16 is a diagram of a tracking area update scenario according to this application;

FIG. 17 is a schematic flowchart of another communication method according to this application;

FIG. 18 is a schematic flowchart of another communication method according to this application;

FIG. 19 is a schematic flowchart of another communication method according to this application;

FIG. 20 is a diagram of an elevation angle according to this application;

FIGS. 21A-21B are diagrams of another elevation angle according to this application;

FIG. 22 is a schematic flowchart of another communication method according to this application;

FIG. 23 is a diagram of a delay according to this application;

FIG. 24 is a diagram of a structure of a communication apparatus according to this application;

FIG. 25 is a diagram of a structure of another communication apparatus according to this application; and

FIG. 26 is a diagram of a structure of another communication apparatus according to this application.

## DESCRIPTION OF EMBODIMENTS

The following describes technical solutions of this application with reference to accompanying drawings.

In the descriptions of this application, unless otherwise specified, "/" represents an "or" relationship between associated objects. For example, A/B may represent A or B. "And/or" in this application describes only an association relationship of associated objects and represents that three relationships may exist. For example, A and/or B may represent the following three cases: Only A exists, both A and B exist, and only B exists. A and B may be singular or plural.

In the descriptions of this application, unless otherwise specified, "a plurality of" means two or more. "At least one of the following items (pieces)" or a similar expression thereof means any combination of these items, including a single item (piece) or any combination of a plurality of items (pieces). For example, at least one (piece) of a, b, or c may represent a, b, c, a and b, a and c, b and c, or a, b, and c.

In addition, for ease of clearly describing the technical solutions in embodiments of this application, the words such as "first" and "second" are used to distinguish between same or similar items whose functions are basically the same in embodiments of this application. A person skilled in the art may understand that the words such as "first" and "second" do not limit a quantity or an execution order, and the words such as "first" and "second" do not necessarily indicate a specific difference.

In embodiments of this application, words such as "example" or "for example" are used to represent giving examples, illustrations, or descriptions. Any embodiment or design solution described as "example" or "for example" in embodiments of this application should not be construed as being more preferred or advantageous than other embodiments or design solutions. Specifically, the words such as "example" or "for example" are used to present a related concept in a specific manner for ease of understanding.

It may be understood that, an "embodiment" mentioned throughout this specification means that particular features, structures, or characteristics related to the embodiment are included in at least one embodiment of this application. Therefore, embodiments in the entire specification do not necessarily refer to a same embodiment. Further, these specific features, structures, or characteristics may be combined in one or more embodiments in any suitable manner. It may be understood that in embodiments of this application, sequence numbers of processes do not mean a sequence of execution. The sequence of execution of the processes should be determined according to functions and internal logic of the processes, and should not constitute any limitation on an implementation process of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on other features, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts of the embodiments, refer to each other. In embodiments of this application and the implementations/implementation methods in the embodiments, unless otherwise specified or unless a logical conflict occurs, terms and/or descriptions are consistent and may be mutually referenced between different embodiments and between the implementations/implementation methods in the embodiments. Technical features in the different embodiments and the implementations/implementation methods in the embodiments may be combined to form a new embodiment, implementation, or implementation method based on an internal logical relationship thereof. The following implementations of this application are not intended to limit the protection scope of this application.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.

The technical solutions in embodiments of this application may be applied to a non-terrestrial network (non-terrestrial network, NTN) system such as a satellite communication system, high altitude platform station (high altitude platform station, HAPS) communication, and an uncrewed aerial vehicle. For example, the technical solutions may be applied to an integrated communication and navigation (integrated communication and navigation, ICAN) system, a global navigation satellite system (global navigation satellite system, GNSS), and the like. These NTN systems may be independently networked, or may be integrated with a conventional terrestrial mobile communication system, for example, a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), a device-to-device (device-to-device, D2D) communication system, a machine-to-machine (machine-to-machine, M2M) communication system, an internet of things (internet of things, IoT) communication system, an internet of vehicles communication system, and a future mobile communication system.

The communication system applicable to this application is merely an example for description. The communication system and the communication scenario applicable to this application are not limited thereto. The communication system and the communication scenario provided in this application do not constitute any limitation on the solutions of this application. A unified description is provided herein. Details are not described below again.

In a possible implementation, the communication system applicable to the solutions of this application may include at least one terminal device and at least one network device. For example, mutual communication may be performed between terminal devices, between a terminal device and a network device, and between network devices in a wired or wireless manner.

Optionally, the terminal device may be a user side device having wireless receiving and sending functions, or may be a chip or a chip system disposed in the device. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal device may be, for example, a terminal device in the internet of things (internet of things, IoT), vehicle to everything (vehicle to everything, V2X), D2D, M2M, a 5G network, or a future evolved public land mobile network (public land mobile network, PLMN). The terminal device may be deployed on land, and include an indoor or outdoor terminal, a handheld terminal, or a vehicle-mounted terminal; or may be deployed on a water surface (for example, on a ship); or may be deployed in the air (for example, on an aircraft, a balloon, or a satellite).

For example, the terminal device may be an uncrewed aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a compute device, another processing device connected to a wireless modem, a vehicle-mounted device, a wearable device (which may also be referred to as a wearable intelligent device), a tablet computer, a computer having wireless receiving and sending functions, a virtual reality (virtual reality, VR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent networked vehicle, an uncrewed aerial vehicle having an uncrewed aerial vehicle (uncrewed aerial vehicle, UAV) to uncrewed aerial vehicle (UAV to UAV, U2U) communication capability, or the like. The terminal device may be mobile, or may be fixed. This is not specifically limited in this application.

Optionally, the network device may be a network side device having wireless receiving and sending functions, or may be a chip, a chip system, or a module disposed in the device. The network device is located in a radio access network (radio access network, RAN) of a mobile communication system, and is configured to provide an access service for a terminal device.

In a possible implementation, the network device may be a wireless relay node or a wireless backhaul node. For example, the network device may serve as a layer 1 relay device, and is configured to regenerate a physical layer signal (that is, perform radio frequency filtering, frequency conversion, and amplification processing), without another higher protocol layer.

In another possible implementation, the network device may implement some or all functions of a base station. For example, the network device may be an evolved NodeB (evolved NodeB, eNB or eNodeB) in an LTE or LTE-advanced (LTE-Advanced, LTE-A) system, for example, a conventional macro base station eNB and a micro base station eNB in a heterogeneous network scenario; or may be a next generation NodeB (next generation NodeB, gNodeB or gNB) in a 5G system; or may be a transmission reception point (transmission reception point, TRP); or may be a base station in a future evolved PLMN; or may be a device that implements a base station function in IoT, V2X, D2D, or M2M.

Alternatively, the network device may be a central unit (central unit, CU), a distributed unit (distributed unit, DU), a CU and a DU, a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, the network device may be a network device in an open radio access network (open RAN, ORAN) system or a module of the network device. In the ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any unit in the CU (or the CU-CP or the CU-UP), the DU, and the RU in this application may be implemented by using a software module, a hardware module, or a combination of the software module and the hardware module.

For example, the base station in embodiments of this application may include base stations in various forms, for example, a macro base station, a micro base station (also referred to as a small cell), a relay station, and an access point. This is not specifically limited in embodiments of this application.

Optionally, the network device in embodiments of this application may be deployed on a non-terrestrial platform, for example, deployed on a low altitude platform (for example, an uncrewed aerial vehicle), a high altitude platform (for example, an airplane), or a satellite. Therefore, the network device in embodiments of this application may also be referred to as a non-terrestrial network device.

For example, the network device is deployed on a satellite, or the network device is a satellite. The communication system may further include an NTN gateway (NTN gateway) (or referred to as a gateway station). Generally, the NTN gateway is deployed on the ground. The NTN gateway may communicate with a satellite, and a link between the satellite and the NTN gateway may be referred to as a feeder link (feeder link).

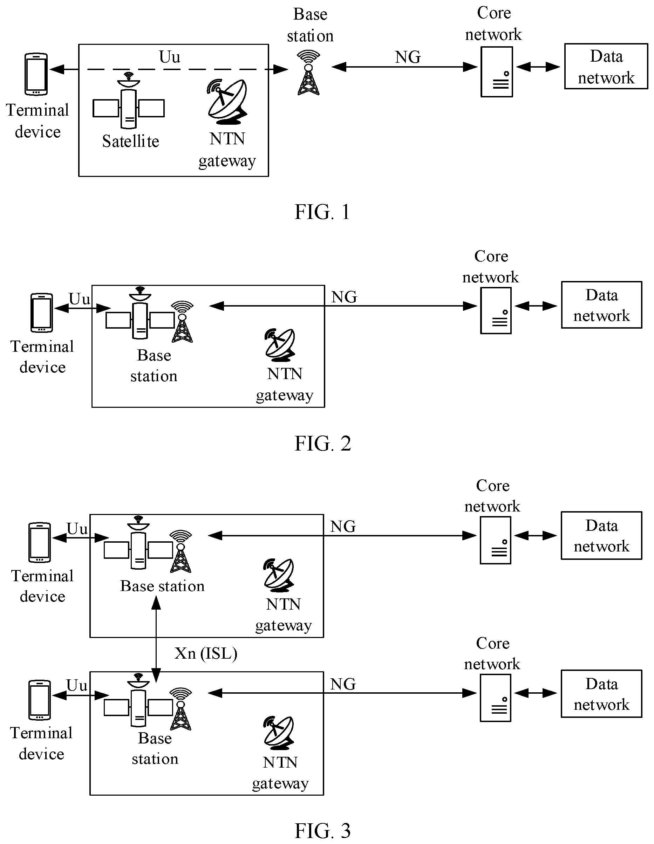

As shown in FIG. 1, when the satellite serves as a wireless relay node, or the satellite has a relay forwarding function, the NTN gateway has a function of a base station or a part of functions of a base station. In this case, the NTN gateway may serve as the base station. Alternatively, the NTN gateway and the base station may be separately deployed. In other words, in addition to the NTN gateway, the communication system further includes a satellite base station deployed on the ground. In FIG. 1, an example in which the NTN gateway and the base station are separately deployed is used for description.

As shown in FIG. 2, when the satellite can implement some or all functions of a base station, the satellite has a data processing capability, and the satellite may serve as the base station. In this case, the NTN gateway and the satellite may transmit user plane data of a terminal device through a satellite radio interface (satellite radio interface, SRI).

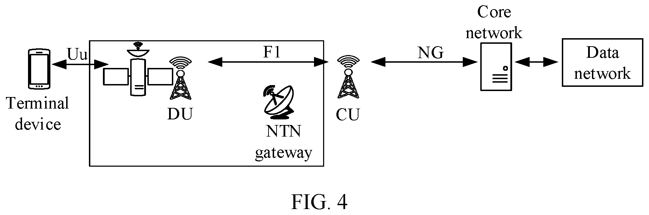

In addition, when the satellite can implement some or all functions of a base station, as shown in FIG. 3, there is an inter-satellite link (inter-satellite link, ISL) between different satellites, and the satellites may communicate with each other through the ISL. Alternatively, as shown in FIG. 4, the satellite may have a DU processing function of a base station, or the satellite can serve as a DU. In this scenario, the CU processing function of the base station may be deployed on the ground, and a CU and the DU communicate with each other through the NTN gateway by using an F1 interface.

In the architectures shown in FIG. 1 to FIG. 4, NG is an interface between a base station and a core network. Uu is an interface between a base station and a terminal device. Xn is an interface between base stations. It may be understood that, with evolution of the communication system, the name of the interface between the base station and the core network, the name of the interface between the base station and the terminal device, and the name of the interface between the base stations may also change. This is not specifically limited in this application.

Optionally, when the satellite serves as a wireless relay node and has a relay forwarding function, it may be considered that the satellite works in a transparent (transparent) mode. When the satellite has a data processing capability and can implement some or all functions of the base station, it may be considered that the satellite works in a regenerative (regenerative) mode. A satellite may support only the transparent mode or only the regenerative mode, or may support the transparent mode and the regenerative mode, and can switch between the transparent mode and the regenerative mode.

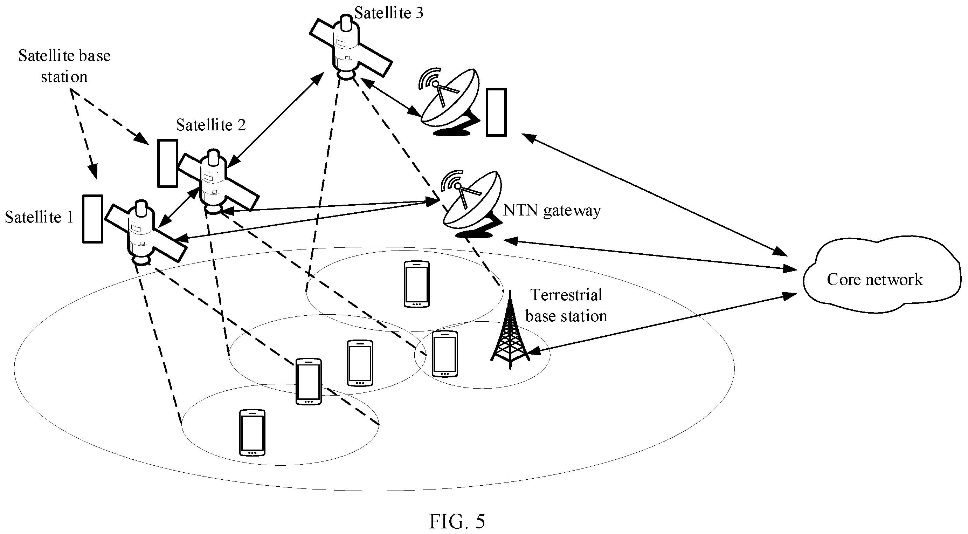

In some implementation scenarios, the NTN and the terrestrial network may converge. For example, FIG. 5 shows a converged network architecture of an NTN and a terrestrial network according to an embodiment of this application. In the architecture shown in FIG. 5, a satellite 1 and a satellite 2 work in the regenerative mode, and the satellite may serve as an NTN base station, or an NTN base station may be deployed on the satellite. A satellite 3 works in the transparent mode. Therefore, an additional NTN base station needs to be deployed. The NTN base station is a base station in an NTN.

In addition, the architecture may further include a terrestrial base station, and the terrestrial base station is a base station in a terrestrial network. The NTN base station and the terrestrial base station may be interconnected through a common core network. As a bearer network, the core network provides an interface to a data network, provides communication connection, authentication, management, and policy control for a terminal device, bears a data service, and the like. For example, the core network may include network elements such as an access and mobility management function (access and mobility management function, AMF) network element, a session management function (session management function, SMF) network element, an authentication server function (authentication server function, AUSF) network element, a policy control function (policy control function, PCF) network element, and a user plane function (user plane function, UPF) network element.

Alternatively, the NTN base station and the terrestrial base station may implement assistance and interconnection with higher time validity through an interface defined between the base stations. For example, the interface between the base stations may be an Xn interface, and the interface between the base station and the core network may be an NG interface. Certainly, the interface between the base stations and the interface between the base station and the core network may alternatively have other implementations. This is not specifically limited in this application.

Optionally, in embodiments of this application, the satellite may provide a service for the terminal device by using a beam. For example, different beams may provide a service for the terminal device in one or more manners of time division, frequency division, and space division. The satellite may work in the regenerative mode, or may work in the transparent mode. In addition, the satellite may work in an earth-moving (earth-moving) mode or an earth-fixed (earth-fixed or quasi-earth fixed) mode. The satellite may be a low earth orbit (low earth orbit, LEO) satellite, a medium earth orbit (medium earth orbit, MEO) satellite, a geostationary earth orbit (geostationary earth orbit, GEO) satellite, or the like. This is not limited.

It may be understood that the satellites in the architectures in FIG. 1 to FIG. 5 each may be replaced with a non-terrestrial load on another flight platform such as an uncrewed aerial vehicle or an airplane.

It should be noted that in the following embodiments of this application, a name of a message between devices, a name of each parameter, a name of each piece of information, or the like is merely an example, and may be another name in another embodiment. This is not specifically limited in the method provided in this application.

It may be understood that in embodiments of this application, an execution body may perform some or all steps in embodiments of this application, and these steps or operations are merely examples. In embodiments of this application, another operation or various operation variants may be alternatively performed. In addition, the steps may be performed in a sequence different from a sequence presented in embodiments of this application, and not all the operations in embodiments of this application may be performed.

For ease of understanding of embodiments of this application, terms in embodiments of this application are first briefly described below. It should be understood that these descriptions are merely for ease of understanding embodiments of this application, and should not constitute any limitation on this application.

1. NTN:

Currently, 5G NR has entered a commercial deployment phase from a standardization phase. The NR standard is mainly researched and designed based on a feature of terrestrial communication. The terrestrial communication can provide a user terminal with high-rate, high-reliability, and low-latency communication, and the like.

Compared with terrestrial communication, NTN communication has significant advantages such as global coverage, long-distance transmission, flexible networking, convenient deployment, and being not restricted by geographic conditions, and has been widely applied to a plurality of fields such as maritime communication, positioning and navigation, disaster relief, scientific experiments, video broadcasting, and earth observation. An NTN network and a terrestrial network may converge, and learn from each other, to jointly form a global seamless integrated communication network covering the sea, land, space, sky, and ground, so as to satisfy a plurality of ubiquitous service requirements of users.

Based on heights of flight platforms from the ground, the NTN may include a low altitude platform (low altitude platform, LAP) subnetwork (LAP subnetwork), a high altitude platform (high altitude platform, HAP) subnetwork (HAP subnetwork), and a satellite communication subnetwork (SATCOM subnetwork).

For example, in the LAP subnetwork, a base station or a base station function is deployed on a low altitude flight platform (for example, an uncrewed aerial vehicle) that is 0.1 km to 1 km away from the ground to provide coverage for a terminal. In the HAP subnetwork, a base station or a base station function is deployed on a high altitude flight platform (for example, an airplane) that is 8 km to 50 km away from the ground to provide coverage for a terminal. In the SATCOM subnetwork, a base station or a base station function is deployed on a satellite that is more than 50 km away from the ground to provide coverage for a terminal.

Further, based on orbital altitudes of satellites, satellite communication systems may be classified into a GEO satellite communication system, a MEO satellite communication system, and a LEO satellite communication system.

The GEO satellite communication system is also referred to as a synchronous orbit satellite system. An orbital altitude of a GEO satellite is 35786 km, and a moving speed of the GEO satellite is the same as the rotation speed of the earth. That is, the GEO satellite can remain stationary relative to the ground. The GEO satellite communication system can provide large cell coverage. Generally, a diameter of a cell is 500 km. However, GEO satellite communication has distinct disadvantages: (1) An orbit of the GEO satellite is far away from the earth, and a propagation loss in free space is high. As a result, a communication link budget is tight. To increase a transmit/receive gain, the satellite needs to be provided with an antenna having a large aperture. (2) A communication transmission delay is high, for example, there is a round-trip delay of approximately 500 milliseconds, which cannot satisfy a requirement of a real-time service. (3) GEO orbital resources are relatively limited, launch costs are high, and coverage cannot be provided for polar regions of the earth.

An orbital altitude of a MEO satellite is between 2000 km and 35786 km, and global coverage can be achieved with a relatively small quantity of satellites. However, the orbital altitude of the MEO satellite is higher than an orbital altitude of a LEO satellite, and a transmission delay is still high compared with that of LEO satellite communication. Therefore, in overall consideration of the advantages and disadvantages of MEO satellite communication, the MEO satellite is mainly used for positioning and navigation.

The orbital altitude of the LEO satellite is between 300 km and 2000 km, and is lower than the orbital altitude of the MEO satellite. The LEO satellite has advantages such as a low transmission delay, a low transmission loss, and low launching costs.

A next generation satellite communication system generally tends to be ultra-dense and heterogeneous. First, a satellite scale develops from 66 satellites in the Iridium constellation to 720 satellites in the OneWeb constellation, and finally extends to 12000+ satellites in the Starlink (Starlink) ultra-dense LEO satellite constellation. Second, a satellite network has a heterogeneous characteristic, and develops from a conventional single-layer communication network to a multi-layer communication network. The communication satellite network tends to have complex and diversified functions, and is gradually compatible with and supports functions such as navigation enhancement, earth observation, and on-orbit processing of multi-dimensional information.

2. Earth-moving (earth-moving) mode and earth-fixed (earth-fixed or quasi-earth fixed) mode:

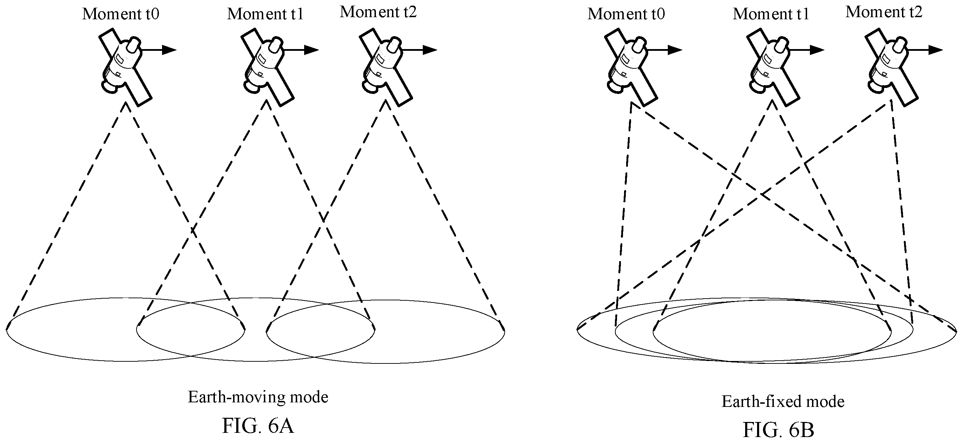

In a satellite communication system, working modes of beams may be usually classified into the earth-moving mode and the earth-fixed mode. As shown in FIG. 6A, in the earth-moving mode, within a period of time (for example, between a moment t0 and a moment t2), a coverage area of a satellite beam moves with a satellite. As shown in FIG. 6B, in the earth-fixed mode, within a period of time (for example, between a moment t0 and a moment t2), a satellite dynamically adjusts a beam direction, so that beams approximately cover a same region on the ground.

For example, a representation of the beam in the protocol may be a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (Quasi-colocation, QCL) information, a QCL assumption, a QCL indicator, or the like. The beam may be indicated by using a transmission configuration indication (transmission configuration indication, TCI) state (TCI-state) parameter, or may be indicated by using a spatial relation (spatial relation) parameter. Therefore, in this application, the beam may be replaced with a spatial domain filter, a spatial filter, a spatial domain parameter, a spatial parameter, a spatial domain setting, a spatial setting, QCL information, a QCL assumption, a QCL indicator, a TCI-state, a spatial relation, or the like. The foregoing terms are equivalent to each other. In this application, the beam may be alternatively replaced with another term for representing the beam. This is not limited in this application.

3-1. Region:

Unless otherwise specified, "region" in the following embodiments of this application is a geographic region. The region is fixed relative to the earth, or the region is understood as a geographic region that is fixed relative to the earth. For example, the region may have at least one of the following attributes: a shape, a contour, a size, a radius, an area, a geographic location, and the like.

In a possible implementation, the region that is fixed relative to the earth may also be referred to as a "beam position", a "geographic region", or the like. Certainly, there may further be another name. A name of the region that is fixed relative to the earth is not specifically limited in this application.

Shapes, contours, sizes, radii, and areas of different regions may be the same or may be different. Different regions have different geographic locations. Different regions may or may not overlap.

In a possible implementation, that the region is fixed relative to the earth may be understood as follows: The contour, the size, or the geographic location of the region does not change. For example, the contour, the size, or the geographic location of the region does not change with time. Alternatively, that the region is fixed relative to the earth may be understood as follows: The contour of the region and a point in the region may be described by using a fixed earth coordinate system, or coordinates of each point on the contour of the region in a fixed earth coordinate system are fixed and unchanged.

In a possible implementation, the shape of the region may be a regular hexagon, or another shape such as a regular pentagon, a circle, or an ellipse. Alternatively, the shape of the region may be an irregular shape. This is not limited.

For example, the shape of the region may be defined in a protocol, or may be defined by the network device. Region shapes defined by different network devices may be the same or may be different. A plurality of region shapes may be defined by a same network device. Similarly, the size, the radius, and the area of the region may also be defined in a protocol, or may be defined by the network device. Region sizes, radii, and areas defined by different network devices may be the same or may be different. A same network device may also define a plurality of region sizes, a plurality of region radii, or a plurality of region areas.

In a possible implementation, the surface of the earth may be divided into a plurality of regions, and the plurality of regions are indexed (for example, numbered).

In a possible division manner, the geographic location of the region is determined based on an identifier of the region, that is, a geographic location of a region may be obtained based on an identifier of the region, in other words, there is an association relationship between an identifier of a region and a geographic location of the region. For example, a plurality of regions may be discretely obtained on the earth, each region corresponds to one identifier, and a geographic location of the region may be obtained based on an identifier of the region.

3-2. Coverage area of a network device:

The coverage area of the network device may be a maximum region that can be covered by the network device. In other words, the coverage area of the network device indicates (or reflects) a maximum coverage capability of the network device.

The coverage area of the network device varies with movement of the network device, that is, coverage areas of the network device may be different at different moments. The coverage area of the network device includes at least one region (that is, a beam position) described above.

The coverage area of the network device varies with movement of the network device, and a region (beam position) is fixed relative to the earth. Therefore, beam positions included in coverage areas of the network device may be different at different moments.

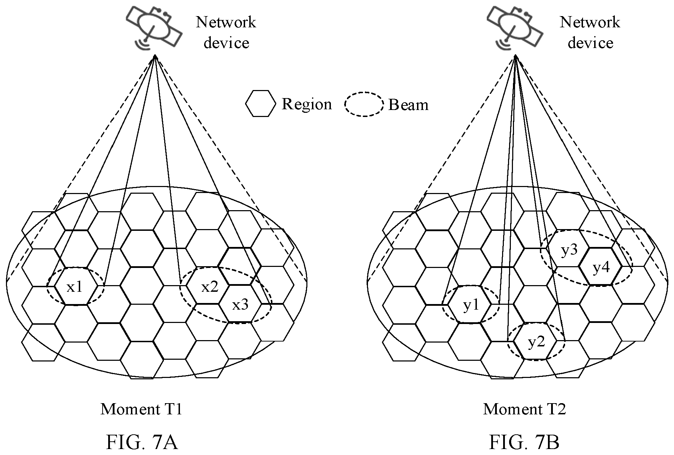

For example, a shape of the region is a regular hexagon. As shown in FIGS. 7A-7B, an elliptic solid line may represent the coverage area of the network device. Regions represented by all regular hexagons in the elliptic solid line are regions included in the coverage area of the network device.

3-3. Service region of a network device:

The service region of the network device may be a maximum region that can be served (or covered) by a beam of the network device. In other words, the service region of the network device indicates (or reflects) a maximum service capability of the network device.

The service region of the network device is less than or equal to a coverage area of the network device. For example, based on the example shown in FIGS. 7A-7B, the service region of the network device may be a range represented by an elliptic solid line. In this case, the service region of the network device is equal to the coverage area of the network device. Alternatively, the service region of the network device may be less than the range represented by the elliptic solid line.

The service region of the network device varies with movement of the network device, that is, service regions of the network device may be different at different moments. The service region of the network device includes at least one region (that is, a beam position) described above.

The service region of the network device varies with movement of the network device, and a region (beam position) is fixed relative to the earth. Therefore, beam positions included in service regions of the network device may be different at different moments.

3-4. Active region of a network device:

A region currently being served (or covered) by a beam of the network device may be referred to as an active region or an activated region. A region currently not being served (or covered) by a beam of the network device may be referred to as an inactive region or a non-activated region. The active region of the network device is one or more of service regions of the network device.

At a moment, the beam of the network device serves (or covers) the active region, that is, some of service regions of the network device. At different moments, the beam of the network device serves (or covers) different active regions, that is, different regions in service regions of the network device.

For example, as shown in FIG. 7A, at a moment T1, the active region served by the beam of the network device includes regions x1, x2, and x3. As shown in FIG. 7B, at a moment T2, the active region served by the beam of the network device includes regions y1, y2, y3, and y4.

4. NTN service region description:

In a first possible implementation, contours (which may be understood as projections of beams on the ground) corresponding to antenna gains or receive power of different regions on the ground may be calculated based on an antenna pattern, for example, a given antenna model, to represent a service region of a satellite/cell. The contour may also be understood as a beam position.

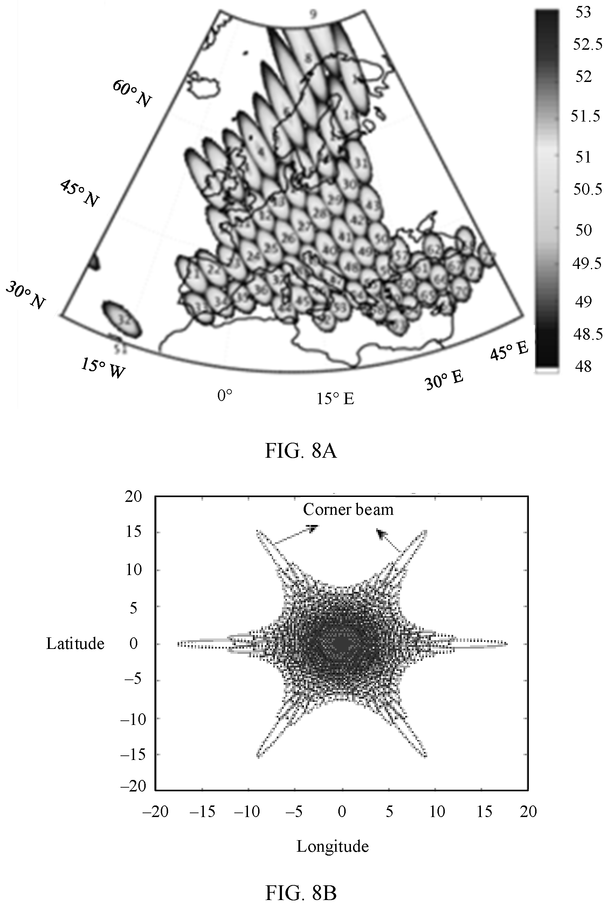

For example, FIG. 8A shows an antenna gain pattern of a 72-beam reference system of a single GEO satellite. An ellipse represents a projection of a beam on the ground, or represents a beam position. FIG. 8B shows a contour of a beam of a LEO satellite on a longitude-latitude plane in an earth-moving mode.

In the first possible implementation, because the projection of the beam on the ground is understood as the beam position, it may be considered that the beam position is statically bound to the beam. Therefore, this solution is usually used for a GEO satellite network or a satellite network in an earth-moving mode. However, in an earth-fixed mode, a tilt angle between a satellite and a specific region on the ground changes dynamically, and a beam projection changes accordingly. Therefore, the solution of static binding between the beam position and the beam may no longer be applicable.

In a second possible implementation, the surface of the earth may be divided into a regular pentagon grid or a regular hexagon grid based on an H3 geographic grid, and the grid is used to represent a service region of a satellite/cell. For example, the service region of the satellite/cell may include one or more grids. Each grid may be understood as a beam position.

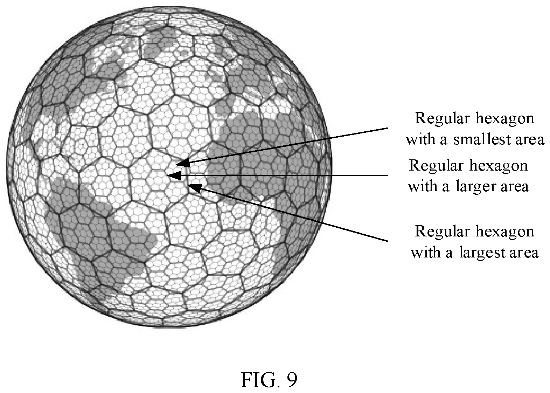

The second possible implementation supports hierarchical addressing of the beam position. For example, as shown in FIG. 9, there are three types of regular hexagons with small, medium, and large areas. A regular hexagon with a smallest area represents a beam position, and regular hexagons with the remaining two areas may be used for hierarchical addressing of the beam position. For ease of description, a regular hexagon with a largest area and a regular hexagon with a second largest area are respectively referred to as a first regular hexagon and a second regular hexagon in the following embodiments.

Based on the example shown in FIG. 9, during hierarchical addressing of the beam position, an index of the first regular hexagon may be understood as a first-layer index of the beam position, an index of the second regular hexagon may be understood as a second-layer index of the beam position, and an index of the regular hexagon with the smallest area may be understood as a third-layer index of the beam position. When a beam position is indexed, a first regular hexagon to which the beam position belongs may be first determined based on the first-layer index, then a second regular hexagon to which the beam position in the first regular hexagon belongs is determined based on the second-layer index, and finally the beam position in the second regular hexagon is determined based on the third-layer index.

In the second possible implementation, currently, only 16 types of beam position radii with different precision are supported, and it is difficult to adapt to different load capabilities (for example, beam radii). For example, when the precision of the beam position radius is an integer and the beam radius is not an integer, the beam position may not be capable of accurately representing a service region of a satellite/cell.

It is easy to understand that, in this application, the load capability may include at least one of the following: an antenna capability (for example, a quantity of antenna elements), transmit power, or the like. The antenna capability and/or the transmit power affects the beam radius. In this case, different load capabilities mean different beam radii. Correspondingly, currently, only 16 types of beam position radii with different precision are supported, and it is difficult to adapt to different load capabilities. It may be understood that currently, only 16 types of beam position radii with different precision are supported, and it is difficult to adapt to different beam radii.

5. Group handover and group reselection:

Movement of a satellite causes group handover of a terminal device in a connected state in a region, or causes group reselection of a terminal device in an idle state in the region.

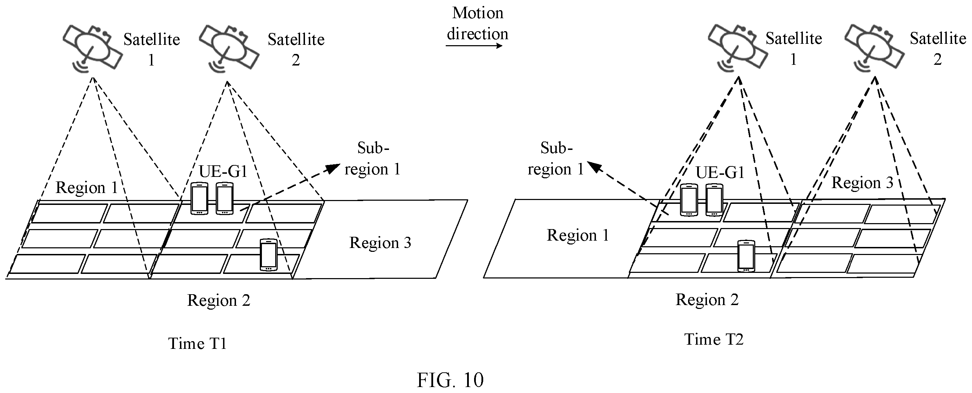

Group handover is used as an example. As shown in FIG. 10, it is assumed that a UE cluster (denoted as UE-G1, including a plurality of UEs) exists in a sub-region 1 of a region 2. At time T1, the sub-region 1 is served by one or more beams of a satellite 2. At time T2, movement of the satellite 2 causes a result that the satellite 2 cannot continue to serve the sub-region 1, and one or more beams of a satellite 1 serve the sub-region 1 on behalf of the satellite 2. In this process, because a satellite covering the sub-region 1 changes, the plurality of UEs in the UE-G1 encounter group handover, and are handed over from the satellite 2 to the satellite 1.

Because a movement speed of a satellite is relatively high, for example, a movement speed of a LEO satellite is about 7.5 km/s, a group handover frequency is relatively high, and is about once every several seconds to dozens of seconds.

6. Mobility management:

Mobility management mainly includes cell handover, cell reselection, registration update, tracking area update (tracking area update, TAU), and the like.

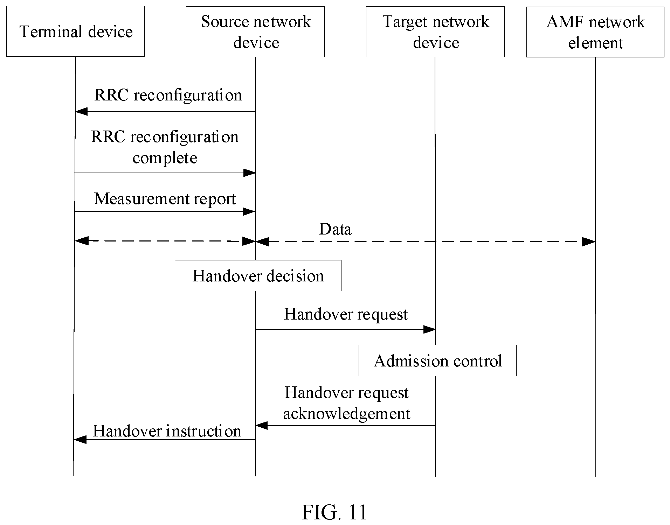

For example, cell handover is used as an example. As shown in FIG. 11, a handover procedure of a terrestrial network mainly includes the following steps.

Step 1: Cell handover measurement.

Generally, a network device delivers measurement configurations corresponding to a plurality of cells (including a serving cell and a neighboring cell) to a terminal device, and the terminal device measures cell signal quality (for example, reference signal received power (reference signal received power, RSRP) and/or reference signal received quality (reference signal received quality, RSRQ)) based on the measurement configurations, to obtain a measurement result. In step 1, the network device may be understood as a source network device, that is, a network device corresponding to a cell before cell handover occurs.

Step 2: Measurement result report.

The terminal device reports the measurement result to the network device (for example, the source network device). A reporting manner may be periodic reporting or event-triggered reporting. In the event-triggered reporting, a reporting condition is usually configured as follows: Signal quality of the serving cell is lower than a threshold 1 and/or signal quality of the neighboring cell is higher than a threshold 2.

Step 3: Handover decision.

The network device (for example, the source network device) selects an appropriate neighboring cell based on the reported result, and exchanges information such as context information, admission control, and reserved resources related to user handover.

Step 4: Handover execution.

The terminal device receives handover-related control information from the serving cell, and completes an access procedure in a new cell.

For another example, cell reselection is used as an example. The network device usually delivers, to the terminal device in a broadcast manner, a parameter such as a measurement configuration related to the neighboring cell. The terminal device compares a measurement value (for example, RSRP and RSRQ) of the terminal device with the parameter (for example, a reselection threshold) delivered by the network device, and autonomously reselects to a target neighboring cell after a condition is satisfied.

It should be noted that, because a near-far effect in an NTN system is not significant, efficiency of cell handover/cell reselection triggered by only signal quality is low. Therefore, a location-assisted handover/reselection enhancement technology is considered for an NR system/the NTN system. For example, mobility management in an NTN network is implemented based on a plurality of manners such as time/a timer, terminal device location information (for example, a distance between the terminal device and a reference point of a source cell is greater than a threshold 1, and a distance between the terminal device and a reference point of a target cell is less than a threshold 2), and a combination of 'timer/location + signal quality'.

However, in an existing communication system, cell handover is usually triggered by movement of the terminal device. Similarly, cell reselection is usually triggered by movement of the terminal device. In a satellite communication system, for example, in a LEO scenario, group handover or group reselection triggered mainly by movement of the network device (for example, a satellite) is more frequent. In a group handover or group reselection mode, the network device configures a satellite coverage area for the terminal device by using configuration information. If group handover or group reselection occurs frequently, the configuration information is updated frequently, and signaling overheads are high. In addition, one satellite may cover one or more regions. When a same satellite covers a relatively large quantity of regions, signaling overheads are further increased.

7. Beam management:

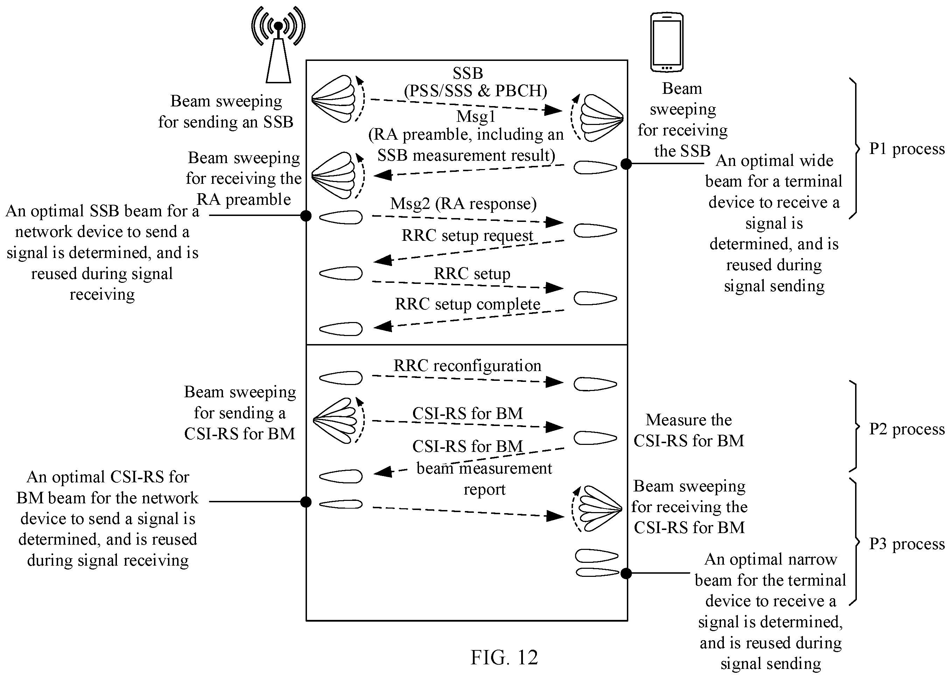

As shown in FIG. 12, a network device (for example, a base station) sends synchronization signal block (synchronization signal block, SSB) beams in different directions through time division in a cell coverage area in a beam sweeping manner. In an idle-state initial access phase, a terminal device includes SSB index (SSB index) information of an optimal SSB beam in a random access (random access, RA) preamble for feedback to the network device, and the network device determines an SSB beam for sending a downlink signal. When receiving an uplink signal, the network device may directly reuse the beam. In a connected-state data transmission phase, the terminal device feeds back an SSB measurement result to the network device by using a measurement report, and the network device determines an SSB beam for sending a downlink signal. When receiving an uplink signal, the network device may directly reuse the beam.

In addition, the network device performs sweeping again by using a narrower CSI-RS for BM beam near the optimal SSB beam (the network device may map the channel state information-reference signal for beam management (channel state information-reference signal for beam management, CSI-RS for BM) beam to the optimal SSB beam by using a beam identifier (identity, ID)). The terminal device feeds back a CSI-RS for BM measurement result to the network device by using a measurement report, and the network device determines a CSI-RS for BM beam for sending a downlink signal. When receiving an uplink signal, the network device may directly reuse the beam.

However, beam management in an existing communication system is generally completed based on signal quality and a beam ID. In a satellite communication system, for example, in a LEO scenario, because a near-far effect is not clear, efficiency of beam management (especially beam switching) triggered based on only signal quality is relatively low.

In addition, movement of a satellite causes a rapid change in a beam ID received on a terminal device side, and the terminal device side needs to frequently adjust a receive beam and a corresponding transmit/receive time-frequency resource. Correspondingly, the network device needs to frequently deliver configuration information to the terminal device. The configuration information includes a configuration parameter of a beam, so that the terminal device determines a receive beam and a transmit/receive time-frequency resource based on the configuration parameter, resulting in high signaling overheads.

Based on FIGS. 8A-8B or FIG. 9, it can be learned that, for a satellite communication system in an earth-fixed mode, how to determine a region covered by a satellite beam is an urgent technical problem to be resolved.

In view of this, this application provides a communication method. The method may be applied to the system shown in FIG. 1 to FIG. 5. The method includes: A terminal device receives a region parameter, where the region parameter indicates a quantity N of regions, and N is any positive integer. The terminal device determines a reference location of a first region based on the region parameter and a first mapping relationship. The first mapping relationship indicates a conversion relationship between the reference location of the first region and the region parameter, and the first region is one of the N regions. For example, the first region is any one of the N regions.

In this application, because the first mapping relationship can indicate the conversion relationship between the reference location of the first region and the region parameter, when the terminal device receives the region parameter, the terminal device may determine the reference location of the first region based on the received region parameter and the first mapping relationship, thereby laying a foundation for the terminal device to perform communication based on the reference location of the first region. For example, when the first region is an active region of a network device, if the terminal device is located in the first region, the terminal device may communicate with the network device, thereby helping improve communication effectiveness.

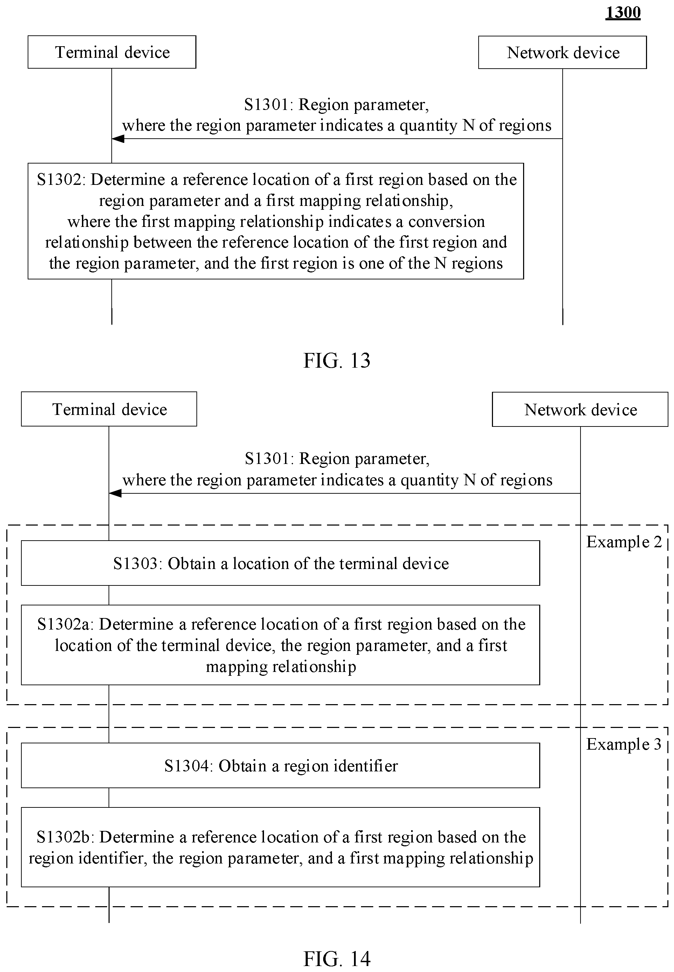

With reference to FIG. 13 to FIG. 23, the following describes in detail the communication method provided in embodiments of this application. A communication method 1300 provided in an embodiment of this application includes the following operations.

S1301: A network device sends a region parameter to a terminal device. Correspondingly, the terminal device receives the region parameter from the network device.

The region parameter indicates a quantity N of regions, and N is any positive integer.

For example, the region parameter includes the quantity N of regions.

For another example, the region parameter includes a region radius. In this application, the region radius and the quantity of regions satisfy the following Formula (1):

$$N_{spot} = \frac{8\pi R_e^2}{3\sqrt{3}R_{spot}^2} \qquad \text{Formula (1)}$$

$N_{spot}$ represents the quantity of regions, $R_{spot}$ represents the region radius, and $R_e$ represents a parameter of a spherical surface on which the $N_{spot}$ regions are located.

It should be noted that, in this application, in an example in which the spherical surface on which the $N_{spot}$ regions are located is the earth, $R_e$ represents a radius of the earth. Certainly, $R_e$ may alternatively be a parameter less than the radius of the earth, or may be a parameter greater than the radius of the earth. In terms of a configuration manner, $R_e$ may be a preconfigured parameter, or may be a parameter configured by the network device. This is not limited in this embodiment of this application.

It should be noted that, in this application, for the "region", refer to the descriptions in the term explanation part. Details are not described again.

In this application, there may be one or more types of regions. For example, the region includes at least one of the following types: a broadcast region, a service region, or a region corresponding to a tracking area. The broadcast region is a geographic region covered by a broadcast beam. The service region is a geographic region covered by a service beam. The region corresponding to the tracking area may be understood as that the tracking area is the region (that is, a beam position), or one tracking area corresponds to one region (that is, a beam position), that is, the tracking area and the region are in one-to-one correspondence.

S1302: The terminal device determines a reference location of a first region based on the region parameter and a first mapping relationship.

The first mapping relationship is described as follows:

The first mapping relationship indicates a conversion relationship between the reference location of the first region and the region parameter.

For example, the first mapping relationship satisfies the following Formula (2):

$$RL(i) = R_e \times (\cos\varphi_i \sin\theta_i, \sin\varphi_i \sin\theta_i, \cos\theta_i)$$

$$\varphi_i = 2\pi\left[\frac{2i}{1+\sqrt{5}}\right]$$

$$\theta_i = \cos^{-1}\left(1 - \frac{2i+1}{N_{spot}}\right), i \in \{0, \cdots, N_{spot} - 1\}$$

RL(i) represents three-dimensional coordinates corresponding to the reference location of the first region, $i$ represents a region identifier of the first region, $R_e$ represents a parameter of a spherical surface on which the first region is located, $N_{spot}$ represents the quantity of regions, and [ ] represents an operator for taking a fractional part.

It is easy to understand that, in this application, when a region label or a region number is used as the region identifier, $i$ can traverse each value in {0, $\cdots$, $N_{spot}$ - 1} based on the foregoing Formula (2). Correspondingly, the terminal device can obtain a reference location of each of the $N_{spot}$ regions based on the foregoing Formula (2).

Further, that $i$ represents the region identifier of the first region (for example, $i$ is a region label of the first region, and is used to identify the first region) may be understood as that each of the $N_{spot}$ regions may be considered as one first region. Correspondingly, the terminal device can traverse each first region in the $N_{spot}$ regions based on the foregoing Formula (2), to obtain a reference location of each first region in the $N_{spot}$ regions. Reference locations of one or more first regions may be determined based on the first mapping relationship.

It is easy to understand that, in a possible equivalent conversion form, the foregoing Formula (2) may be equivalently converted into a longitude-latitude location.

For example, a projection $RL(x_i, y_i)$ of $RL(i)$ on a unit square (unit square) is used. The unit square is a square whose corners are located at four points (0, 0), (1, 0), (0, 1), and (1, 1) on a Cartesian plane.

In other words, the first mapping relationship satisfies the following Formula (3):

$$RL(x_i) = (1 - cos\theta_i)/2$$

$$RL(y_i) = \varphi_i(2\pi)^{-1}$$

$$\varphi_i = 2\pi \left[\frac{2i}{1 + \sqrt{5}}\right]$$

$$\theta_i = cos^{-1}\left(1 - \frac{2i + 1}{N_{spot}}\right), i \in \{0, \cdots, N_{spot} - 1\}$$

$RL(x_i)$ represents a horizontal coordinate of a projection of the reference location of the first region on a unit square on which the first region is located, $RL(y_i)$ represents a vertical coordinate of the projection of the reference location of the first region on the unit square on which the first region is located, i represents the region identifier of the first region, $N_{spot}$ represents the quantity of regions, and [ ] represents an operator for taking a fractional part.

It is easy to understand that, in another possible equivalent conversion form, the foregoing Formula (3) may use Cartesian coordinates $RL(x_i, y_i)$ in a Fibonacci grid. In other words, the first mapping relationship satisfies the following Formula (4):

$$RL(x_i) = i/N_{spot}$$

$$RL(y_i) = frac\left(\frac{i}{\emptyset}\right)$$

$$\emptyset = \frac{1 + \sqrt{5}}{2}$$

$RL(x_i)$ represents a horizontal coordinate of the reference location of the first beam position in the Cartesian coordinates, $RL(y_i)$ represents a vertical coordinate of the reference location of the first beam position in the Cartesian coordinates, i represents the region identifier of the first region, $N_{spot}$ represents the quantity of beam positions, and $frac()$ represents an operator for taking a fractional part.

For another example, the first mapping relationship satisfies the following Formula (5):

$$RL(i) = R_e \times (\sqrt{1 - z_i^2} \cos 2\pi i \, \emptyset, \sqrt{1 - z_i^2} \sin 2\pi i \, \emptyset, z_i)$$

$$z_i = \frac{2i - 1}{N_{spot}} - 1, i \in \{1, \cdots, N_{spot}\}$$

$$\emptyset = \frac{1 + \sqrt{5}}{2}$$

$RL(i)$ represents three-dimensional coordinates corresponding to the reference location of the first region, i represents the region identifier of the first region, $R_e$ represents a parameter of a spherical surface on which the first region is located, and $N_{spot}$ represents the quantity of regions.

For another example, the first mapping relationship satisfies the following Formula (6):

$$RL(i) = (lon(i), lat(i))$$

$$lon(i) = sin^{-1}(\frac{2i}{2N + 1})$$

$$lat(i) = 2\pi i \emptyset^{-1}$$

$$N_{spot} = 2N + 1$$

$$\emptyset = \frac{1 + \sqrt{5}}{2}$$

RL(i) represents the reference location of the first region, $lon(i)$ represents a longitude corresponding to the reference location of the first region, $lat(i)$ represents a latitude corresponding to the reference location of the first region, $i$ represents the region identifier of the first region, and $N_{spot}$ represents the quantity of regions.

It should be noted that a unit of the longitude $lon(i)$ corresponding to the reference location of the first region may be radian. Similarly, a unit of the latitude $lat(i)$ corresponding to the reference location of the first region may also be radian.

The first region is described as follows:

The first region is one of the N regions. Refer to descriptions of the following three examples (the following example 1 to example 3).

Example 1: The first region is any one of the N regions.

In this case, because the parameter $i$ traverses from 1 to $N_{spot}$ in the foregoing Formula (2) to Formula (6), the terminal device may learn of a reference location of any one of the N regions based on the foregoing formulas. In other words, the terminal device may learn of topology statuses of the N regions, or coverage areas of the N regions, or an adjacency relationship between different regions in the N regions, or the like.

Example 2: The first region is a specific region in the N regions, and is a region in which the terminal device is located.

In example 2, as shown in FIG. 14, the method further includes S1303.

S1303: The terminal device obtains a location of the terminal device.

For example, the terminal device may obtain a GNSS location of the terminal device.

When the terminal device performs S1303, S1302 includes S1302a.

S1302a: The terminal device determines the reference location of the first region based on the location of the terminal device, the region parameter, and the first mapping relationship.

The first region is the region in which the terminal device is located.

For example, first, the terminal device determines reference locations of M regions in the N regions based on the region parameter and the first mapping relationship. M is a positive integer less than or equal to N. Then, the terminal device selects, from the reference locations of the M regions, a region whose reference location is closest to the location of the terminal device as the first region. Correspondingly, the terminal device can determine the reference location of the first region.

It should be noted that the M regions in the N regions are described as follows:

In an example, M may be equal to N. In this case, it may be understood that the terminal device determines reference locations of all of the N regions based on the region parameter and the first mapping relationship, and then selects, from the reference locations of all of the N regions, a region closest to the location of the terminal device as the first region.

In another example, M may be less than N. In this case, it may be understood that the terminal device determines reference locations of some of the N regions based on the region parameter and the first mapping relationship, and then selects, from the reference locations of all of the some regions, a region closest to the location of the terminal device as the first region. The some of the N regions may be determined based on the location of the terminal device, for example, may be one or more regions that are in the N regions and that are relatively close to the location of the terminal device.

In this way, the terminal device can determine a reference location of the region in which the terminal device is located.

Example 3: The first region is a specific region in the N regions, and is a region indicated by the network device by using a region identifier.

In example 2, as shown in FIG. 14, the method further includes S1304.

S1304: The terminal device obtains a region identifier.

The region identifier is used to identify a region. For example, the region identifier is used to identify one of the N regions.

For example, the network device sends the region identifier to the terminal device. Correspondingly, the terminal device receives the region identifier from the network device.

When the terminal device performs S1304, S1302 includes S1302b.

S1302b: The terminal device determines the reference location of the first region based on the region identifier, the region parameter, and the first mapping relationship.

The first region is a region corresponding to the region identifier.

For example, the region identifier is a region number. For example, a region identifier of a $1^{st}$ region in the N regions is 1, a region identifier of a $2^{nd}$ region in the N regions is 2, a region identifier of a $3^{rd}$ region in the N regions is 3, and so on. In this case, if the region identifier is k, the first region is a $k^{th}$ region in the N regions. The terminal device determines a reference location of the $k^{th}$ region in the N regions based on the region parameter and the first mapping relationship. Correspondingly, the terminal device can determine the reference location of the first region.

In this way, the terminal device can determine a reference location of the region identified by the region identifier.

The foregoing describes a process in which the terminal device determines the reference location of the first region.

It should be noted that the reference location of the first region is used to assist the terminal device in communication. It may be understood that the terminal device performs, based on the reference location of the first region, at least one of the following communication procedures: tracking area update, initial access, beam management, mobility management, and the like.

The following describes a communication process performed by the terminal device based on the reference location of the first region.

Case 1: Tracking area update TAU

In case 1, an example in which 'the N regions are regions corresponding to a tracking area' is used for description.

In a first possible implementation, an example in which 'the first region is the region in which the terminal device is located' is used to describe a tracking area update scenario.

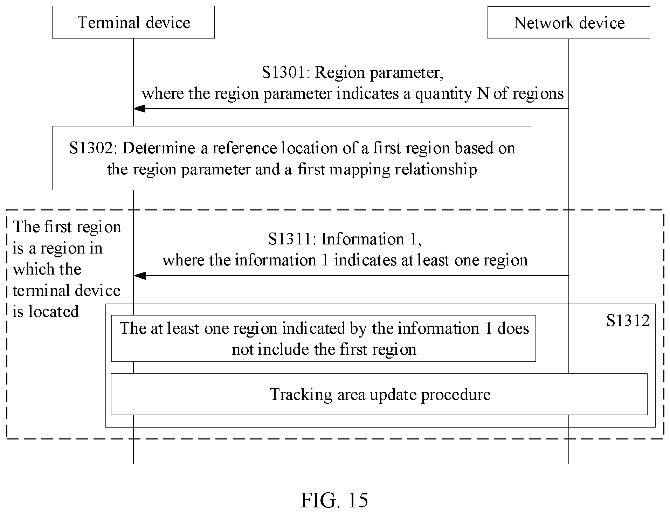

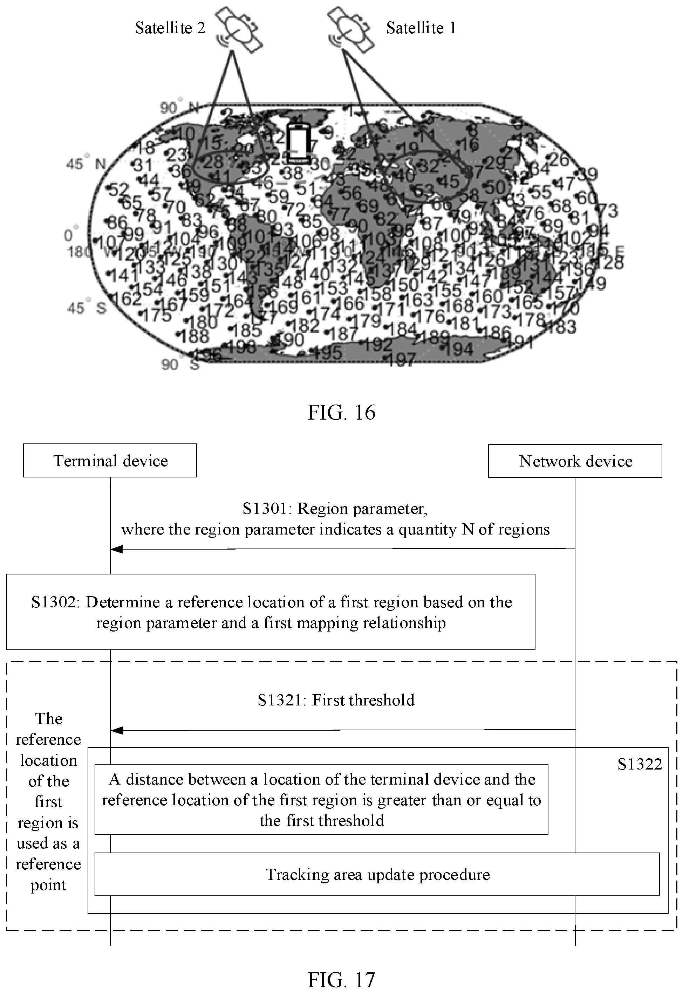

As shown in FIG. 15 and FIG. 16, the method further includes the following operations.

S1311: The network device sends information 1 to the terminal device. Correspondingly, the terminal device receives the information 1 from the network device.

The information 1 is described as follows:

The information 1 indicates at least one region. For example, the information 1 indicates at least one of the N regions.

For example, the information 1 includes an identifier of each of the at least one region. This may be denoted as TAC_Net = {bw_x1, bw_x2, ..., bw_xN}. TAC_Net represents a region identifier set of the region indicated by the information 1, bw_x1 represents a region identifier x1, bw_x2 represents a region identifier x2, and bw_xN represents a region identifier xN.

FIG. 16 is used as an example. When the network device is a satellite 1, TAC_Net_1 = {bw_32, bw_40, bw_45, bw_53}. TAC_Net_1 represents the region identifier set of the region indicated by the information 1. bw_32 represents a region identifier 32, and indicates a region whose number is 32 in 197 regions. bw_40 represents a region identifier 40, and indicates a region whose number is 40 in 197 regions. bw_45 represents a region identifier 45, and indicates a region whose number is 45 in 197 regions. bw_53 represents a region identifier 53, and indicates a region whose number is 53 in 197 regions.

FIG. 16 is used as an example. When the network device is a satellite 2, TAC_Net_2 = {bw_28, bw_33, bw_41}. TAC_Net_2 represents the region identifier set of the region indicated by the information 1. bw_28 indicates a region identified by a region identifier 28, and indicates a region whose number is 28 in 197 regions. bw_33 represents a region identifier 33, and indicates a region whose number is 33 in 197 regions. bw_41 represents a region identifier 41, and indicates a region whose number is 41 in 197 regions.

For another example, the information 1 includes a second region and a first parameter.

The second region is one of the at least one region, and the first parameter indicates a quantity of the at least one region.

In an example, the information 1 may be denoted as TAC_Net = {bw_x0, k0}. TAC_Net represents a region identifier set of the region indicated by the information 1, bw_x0 represents a region identifier of the second region, and k0 represents k0 regions closest to the second region.

FIG. 16 is used as an example. When the network device is a satellite 1, TAC_Net_1 = {bw_32, 3}. TAC_Net_1 represents the region identifier set of the region indicated by the information 1, bw_32 represents the region identifier of the second region, and '3' represents three regions closest to bw_32, for example, bw_40, bw_45, and bw_53.

FIG. 16 is used as an example. When the network device is a satellite 2, TAC_Net_2 = {bw_28, 2}. TAC_Net_2 represents the region identifier set of the region indicated by the information 1, bw_28 represents the region identifier of the second region, and '2' represents two regions closest to bw_28, for example, bw_33 and bw_41.

It is easy to understand that, in this application, the information 1 is represented as TAC_Net = {bw_x0, k0}. In this case, k0 represents k0 regions closest to the second region (for example, a region identified by bw_x0). The k0 regions closest to the second region may be understood as follows:

Case 1: A shape of a region (that is, a beam position) may be a regular shape, for example, a regular hexagon or a regular pentagon.

In this case, for a region, distances between the region and different regions adjacent to the region are equal. For example, a central location of each region is used as a reference location of the region. For a regular-hexagon region, distances between the region and six regions adjacent to the region are equal. In this case, if k0 is less than or equal to 6, the k0 regions closest to the second region may be understood as k0 regions closest to the region identifier of the second region (for example, k0 regions closest to a region number of the second region) in the six regions closest to the second region. Alternatively, the k0 closest regions are selected in another manner. This is not limited in this embodiment of this application.

Case 2: A shape of a region (that is, a beam position) may alternatively be an irregular shape.

In this case, for a region, distances between the region and different regions adjacent to the region may be equal or unequal.

When the distances between the region and the different regions adjacent to the region are equal, the k0 regions closest to the second region may be understood as k0 regions closest to the region identifier of the second region in x regions closest to the second region. x is a positive integer greater than or equal to k0. For details, refer to the descriptions in case 1. Details are not described again.

When the distances between the region and the different regions adjacent to the region are unequal, the k0 regions closest to the second region may be determined based on the distances between the region and the different regions adjacent to the region.

For example, the second region is a region identified by bw_x0, and regions adjacent to bw_x0 include a region identified by bw_x1, a region identified by bw_x2, and a region identified by bw_x3. Distances between the region identified by bw_x0 and regions adjacent to the region may include the following:

A distance between a reference location of the region identified by bw_x0 and a reference location of the region identified by bw_x1 is denoted as a distance 1.

A distance between the reference location of the region identified by bw_x0 and a reference location of the region identified by bw_x2 is denoted as a distance 2.

A distance between the reference location of the region identified by bw_x0 and a reference location of the region identified by bw_x3 is denoted as a distance 3.

When the distance 1 is less than the distance 2 and the distance 2 is less than the distance 3, if k0=2, the k0 regions closest to the second region include the region identified by bw_x1 and the region identified by bw_x2.

In another example, the information 1 may be denoted as TAC_Net = {bw_x0, k0+1}. TAC_Net represents a region identifier set of the region indicated by the information 1, bw_x0 represents a region identifier of the second region, and k0 represents k0 regions closest to the second region.

FIG. 16 is used as an example. When the network device is a satellite 1, TAC_Net_1 = {bw_32, 4}. TAC_Net_1 represents the region identifier set of the region indicated by the information 1, bw_32 represents the region identifier of the second region, and '4' represents bw_32 and three regions closest to bw_32, that is, bw_32, bw_40, bw_45, and bw_53.

FIG. 16 is used as an example. When the network device is a satellite 2, TAC_Net_2 = {bw_28, 3}. TAC_Net_2 represents the region identifier set of the region indicated by the information 1, bw_28 represents the region identifier of the second region, and '3' represents bw_28 and two regions closest to bw_28, that is, bw_28, bw_33, and bw_41.

It is easy to understand that, in the at least one region indicated by the information 1, each region is a region corresponding to a tracking area, and each region is one of the N regions.

It is easy to understand that the information 1 may be carried in a broadcast message.

S1312: The terminal device initiates tracking area update when the at least one region indicated by the information 1 does not include the first region.

FIG. 16 is used as an example. The region in which the terminal device is located may be denoted as TAC_UE_config = {bw_25, bw_30, bw_33, bw_38, bw_46}. The region identifier of the first region may be bw_25, bw_30, bw_33, bw_38, or bw_46.

FIG. 16 is used as an example. When the network device is a satellite 1, the at least one region indicated by the information 1 is TAC_Net_1 = {bw_32, bw_40, bw_45, bw_53}. Because TAC_Net_1 does not include a region in TAC_UE_config, the terminal device initiates tracking area update. For a tracking area update procedure, refer to a related technology. Details are not described herein. In addition, the terminal device may further obtain a new TAC list, that is, TAC_UE_config_new, from a network device side, to determine whether to perform tracking area update next time.

It is easy to understand that the terminal device does not initiate tracking area update when the at least one region indicated by the information 1 includes the first region.

FIG. 16 is used as an example. When the network device is a satellite 2, the at least one region indicated by the information 1 is TAC_Net_2 = {bw_28, bw_33, bw_41}. Because TAC_Net_2 includes the region bw_33 in TAC_UE_config, the terminal device does not initiate tracking area update.

It is easy to understand that, in case 1, the region identifier of the region in which the terminal device is located may be configured by the network device. For example, a TAC list configured on a network side may be denoted as TAC_UE_config = {bw_y1, bw_y2, ..., bw_yM}. bw_y1 represents a region identifier y1, bw_y2 represents a region identifier y2, and bw_yM represents a region identifier yM. For the terminal device, the terminal device may determine the reference location of the first region based on a region identifier in TAC_UE_config, the region parameter, and the first mapping relationship. For details, refer to the descriptions of S1302b. Details are not described again.

It should be noted that, in FIG. 16, an example in which the region radius R_TA = 1000 km (in other words, the quantity N_TA of regions = 197) is used for description. Certainly, the region radius may alternatively have another value. This is not limited in this embodiment of this application. When the region radius R_TA = 1000 km, a tracking area code (tracking area code, TAC) may be represented by 8 bits (bit), that is, TrackingAreaCode = BIT_String(Size(8)).

In this way, the network device only needs to broadcast the information 1. This helps reduce signaling overheads.

It should be noted that, in case 1, reduction of signaling overheads may be reflected as follows:
The region identifier in this application occupies a relatively small quantity of bits. For example, the region identifier may be represented by 8 bits. When the network device broadcasts the region identifier, a relatively small quantity of communication resources may be occupied, and broadcast signaling overheads are low.

In addition, when there are a plurality of region identifiers, this application may be described in a manner of 'one region identifier + the quantity of regions', for example, {bw_x0, k0} or {bw_x0, k0+1}. There is no need to send a region identifier of each region in broadcast signaling, thereby further reducing broadcast signaling overheads.

In case 1, in a possible example, region radii in different time periods are different. It may be understood that there is an association relationship between a region radius and a time period. The association relationship between the region radius and the time period may be preconfigured in the terminal device, or may be indicated by the network device to the terminal device. This is not limited in this embodiment of this application.

Specifically, in a first time period, the region radius of each of the N regions is R_TA_1, for example, R_TA_1 = 1000 km. Alternatively, the description may be replaced with the following: In a first time period, the quantity of the N regions is N_TA_1, for example, N_TA_1 = 197. It may be understood that a region radius 1 is associated with the first time period. This is specifically reflected as that in the first time period, the region radius of each of the N regions is the region radius 1.

In this case, the region radius is large, and is applicable to a scenario with light service load. Correspondingly, the terminal device does not need to frequently initiate tracking area update, thereby helping reduce signaling overheads.

In a second time period, the region radius of each of the N regions is R_TA_2, for example, R_TA_2 = 200 km. Alternatively, the description may be replaced with the following: In a second time period, the quantity of the N regions is N_TA_2, for example, N_TA_2 = 4919. It may be understood that a region radius 2 is associated with the second time period. This is specifically reflected as that in the second time period, the region radius of each of the N regions is the region radius 2.

In this case, the region radius is small, and is applicable to a scenario with heavy service load. Correspondingly, because the region radius is small, paging signaling overheads of the network device are low, thereby reducing paging signaling overheads.

Based on this, when the region parameter in S1301 includes R_TA_1 and R_TA_2, the terminal device may learn, based on a current moment, a region radius corresponding to the current moment in the region parameter (if the current moment belongs to the first time period, the region radius is R_TA_1; or if the current moment belongs to the second time period, the region radius is R_TA_2). The terminal device determines the reference location of the first region based on the location of the terminal device, the region radius corresponding to the current moment in the region parameter, and the first mapping relationship.

In this way, a communication system may configure 'there is an association relationship between a region radius and a time period' for the terminal device based on a service load status, to flexibly adjust the region radius based on the service load status, thereby achieving an optimal compromise between a tracking area update frequency and a tracking area update range. For example, in a time period in which service load is light, a region radius that is set in the communication system is large, that is, a region range is large, and the terminal device initiates tracking area update at a low frequency, thereby reducing signaling overheads. For another example, in a time period in which service load is heavy, a region radius that is set in the communication system is small, that is, a region range is small, and paging signaling overheads of the network device are low, thereby reducing paging signaling overheads.

In case 1, in another possible example, region radii included in different geographic regions are different. It may be understood that there is an association relationship between a region radius and a geographic region. The association relationship between the region radius and the geographic region may be preconfigured in the terminal device, or may be indicated by the network device to the terminal device. This is not limited in this embodiment of this application.

Specifically, in a first geographic region, for example, the southern hemisphere of the earth, the region radius of each of the N regions is R_TA_1, for example, R_TA_1 = 1000 km. Alternatively, the description may be replaced with the following: In a first geographic region, the quantity of the N regions is N_TA_1, for example, N_TA_1 = 197. It may be understood that a region radius 1 is associated with the first geographic region. This is specifically reflected as that if the N regions are located in the first geographic region, the region radius of each of the N regions is the region radius 1.

In this case, the region radius is large, and is applicable to a scenario with light service load. Correspondingly, the terminal device does not need to frequently initiate tracking area update, thereby helping reduce signaling overheads.

In a second geographic region, for example, the northern hemisphere of the earth, the region radius of each of the N regions is R_TA_2, for example, R_TA_2 = 200 km. Alternatively, the description may be replaced with the following: In a second geographic region, the quantity of the N regions is N_TA_2, for example, N_TA_2 = 4919. It may be understood that a region radius 2 is associated with the second geographic region. This is specifically reflected as that if the N regions are located in the second geographic region, the region radius of each of the N regions is the region radius 2.

In this case, the region radius is small, and is applicable to a scenario with heavy service load. Correspondingly, because the region radius is small, paging signaling overheads of the network device are low, thereby reducing paging signaling overheads.

Based on this, in S1301, the network device delivers different region parameters for different geographic regions. For example, for the first geographic region, a region parameter delivered by the network device is a region parameter 1, and indicates the quantity N_TA_1 of regions, that is, N=N_TA_1. For another example, for the second geographic region, a region parameter delivered by the network device is a region parameter 2, and indicates the quantity N_TA_2 of regions, that is, N=N_TA_2.

Correspondingly, for the terminal device, the terminal device may learn, based on a current location of the terminal device, a region radius corresponding to the location of the terminal device (that is, the location of the terminal device). For example, if the terminal device is located in a region (that is, a beam position) in the first geographic region, the region radius (that is, a beam position radius) is R_TA_1; or if the terminal device is located in a region (that is, a beam position) in the second geographic region, the region radius (that is, a beam position radius) is R_TA_2. Then, the terminal device determines the reference location of the first region based on the region radius corresponding to the location of the terminal device and the first mapping relationship.

In this way, a communication system may configure 'there is an association relationship between a region radius and a geographic region' for the terminal device based on a service load status, to flexibly configure the region radius based on the service load status, thereby achieving an optimal compromise between a tracking area update frequency and a tracking area update range. For example, in a geographic region in which service load is light, a region radius that is set in the communication system is large, that is, a region range is large, and the terminal device initiates tracking area update at a low frequency, thereby helping reduce signaling overheads. For another example, in a geographic region in which service load is heavy, a region radius that is set in the communication system is small, and paging signaling overheads of the network device are low, thereby reducing paging signaling overheads.

In a second possible implementation, a tracking area update scenario is described by using an example in which 'the reference location of the first region is a reference point'.

As shown in FIG. 17, the method further includes the following operations.

S1321: The network device sends a first threshold to the terminal device. Correspondingly, the terminal device receives the first threshold from the network device.

For example, the first threshold may be denoted as TAU_dis, representing that the first threshold is a threshold used to determine whether to initiate tracking area update.

For example, information broadcast by the network device may be denoted as TAC_UE_config = {N_TA/R_TA, bw_25, 40 km}. N_TA/R_TA represents a broadcast region parameter, and may be a region radius R_TA or a quantity N_TA of regions. bw_25 represents the region identifier of the first region. 40 km represents the first threshold.

S1322: The terminal device initiates tracking area update when a distance between a location of the terminal device and the reference location of the first region is greater than or equal to the first threshold.

For example, the location of the terminal device may be a GNSS location of the terminal device. When a distance between the GNSS location of the terminal device and the reference location of the first region is greater than or equal to the first threshold, the terminal device initiates tracking area update. For a tracking area update procedure, refer to a related technology. Details are not described herein. In addition, the terminal device may further obtain a new reference point, that is, TAC_UE_config_new, from the network device side. TAU_UE_config_new = {bw_x0_new, TAU_dis_new}, and is used to determine whether to perform tracking area update next time. bw_x0_new represents an identifier of a region used as the new reference point, and TAU_dis_new represents a threshold used to determine whether to initiate tracking area update next time.

It should be noted that a process in which the terminal device learns that 'the reference location of the first region is a reference point' is as follows: The network device sends the region identifier to the terminal device. Correspondingly, the terminal device receives the region identifier from the network device. For details, refer to the descriptions of S1304. Details are not described herein again. In this case, the region identifier delivered by the network device indicates a region used as the reference point.

It is easy to understand that the terminal device does not initiate tracking area update when the distance between the location of the terminal device and the reference location of the first region is less than the first threshold.

In this way, the network device only needs to deliver the first threshold, and does not need to broadcast a TAC list, for example, the information 1 in S1311. Therefore, broadcast signaling overheads are further reduced while it is ensured that the terminal device normally initiates tracking area update.

Case 2: Access procedure

In a first possible implementation, an access scenario is described by using an example in which 'the N regions are broadcast regions, and the first region is the region in which the terminal device is located'.

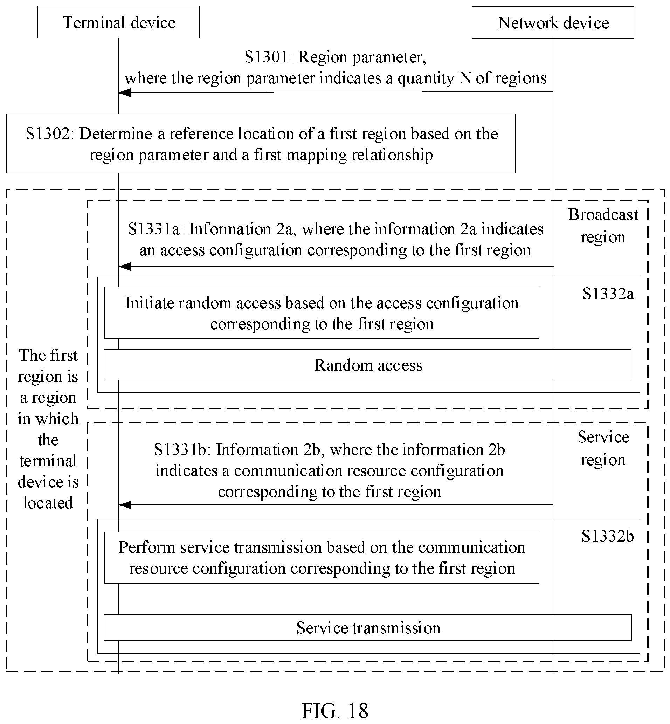

As shown in FIG. 18, the method further includes the following operations.

S1331a: The network device sends information 2a to the terminal device. Correspondingly, the terminal device receives the information 2a from the network device.

The information 2a is described as follows:

The information 2a indicates an access configuration corresponding to the first region. This may be understood as that the information 2a is access information and indicates a region-level access configuration.

For example, the access configuration includes one or more of the following: a random access channel occasion (random access channel occasion, RO) resource configuration, a preamble (preamble) configuration, a timing advance (timing advance, TA), an accessible time period, and the like.

In a possible example, the information 2a indicates only the access configuration corresponding to the first region, and does not indicate an access configuration corresponding to another region. It may be understood that in the N regions, the network device delivers, for different regions, access configurations of the regions. For example, the N regions are four regions, which are respectively denoted as a region 1, a region 2, a region 3, and a region 4. The network device indicates an access configuration of the region 1 by using information X1, the network device indicates an access configuration of the region 2 by using information X2, the network device indicates an access configuration of the region 3 by using information X3, and the network device indicates an access configuration of the region 4 by using information X4.

In another possible example, the information 2a indicates access configurations of at least two of the N regions. It may be understood that the network device indicates the access configurations of the at least two regions by using same information. For example, the N regions are four regions, which are respectively denoted as a region 1, a region 2, a region 3, and a region 4. The region 1 and the region 2 belong to a same cell, and the network device indicates access configurations of the region 1 and the region 2 by using information Y1. The region 3 and the region 4 belong to a same cell, and the network device indicates access configurations of the region 3 and the region 4 by using information Y2.

S1332a: The terminal device initiates random access based on the access configuration corresponding to the first region.

For example, the terminal device determines the reference location of the first region based on the location of the terminal device, the region parameter, and the first mapping relationship. For details, refer to the descriptions of S1302a. Details are not described again. Correspondingly, the terminal device can also learn of the region identifier of the first region. Then, the terminal device determines the access configuration of the first region from the information 2a based on the region identifier of the first region, and initiates random access based on the access configuration corresponding to the first region.

In this way, when the network device indicates a region-level access configuration (for example, the access configuration of the first region) to the terminal device, the terminal device initiates random access based on the access configuration of the region in which the terminal device is located, thereby reducing signaling overheads.

It should be noted that, in a random access initiation scenario, reduction of signaling overheads may be reflected as follows:

The region identifier in this application occupies a relatively small quantity of bits. For example, the region identifier may be represented by 8 bits. When the region identifier is transmitted between the terminal device and the network device, a relatively small quantity of communication resources may be occupied, and signaling overheads are low.

In addition, when there are a plurality of region identifiers, this application may be described in a manner of 'one region identifier + the quantity of regions', for example, {bw_x0, k0} or {bw_x0, k0+1}. There is no need to send a region identifier of each region in signaling, thereby further reducing signaling overheads.

It should be noted that, in the random access initiation scenario, this application can provide a region-level (that is, beam-position-level) access configuration, so that the terminal device can initiate random access based on the region-level (that is, beam-position-level) access configuration. Compared with performing random access based on a cell in a related technology, this application can enable the terminal device to initiate random access more flexibly.

In a second possible implementation, an access scenario is described by using an example in which 'the N regions are service regions, and the first region is the region in which the terminal device is located'.

As shown in FIG. 18, the method further includes the following operations.

S1331b: The network device sends information 2b to the terminal device. Correspondingly, the terminal device receives the information 2b from the network device.

The information 2b is described as follows:

The information 2b indicates a communication resource configuration corresponding to the first region. This may be understood as that the information 2b is service resource information and indicates a region-level communication resource configuration.

For example, the communication resource configuration includes one or more of the following: a frequency resource (for example, a bandwidth part (bandwidth part, BWP)), polarization, an available time period, and the like.

In a possible example, the information 2b indicates only the communication resource configuration corresponding to the first region, and does not indicate a communication resource configuration corresponding to another region. It may be understood that in the N regions, the network device delivers, for different regions, communication resource configurations of the regions.

In another possible example, the information 2b indicates communication resource configurations of at least two of the N regions. It may be understood that the network device indicates the communication resource configurations of the at least two regions by using same information.

S1332b: The terminal device performs service transmission based on the communication resource configuration corresponding to the first region.

For example, the terminal device determines the reference location of the first region based on the location of the terminal device, the region parameter, and the first mapping relationship. For details, refer to the descriptions of S1302b. Details are not described again. Correspondingly, the terminal device can also learn of the region identifier of the first region. Then, the terminal device determines the communication resource configuration of the first region from the information 2b based on the region identifier of the first region, and performs service transmission based on the communication resource configuration corresponding to the first region.

In this way, when the network device indicates a region-level communication resource configuration (for example, the communication resource configuration of the first region) to the terminal device, the terminal device performs service transmission based on the communication resource configuration of the region in which the terminal device is located, thereby reducing signaling overheads.

It should be noted that, in a service transmission scenario, reduction of signaling overheads may be reflected as follows:

The region identifier in this application occupies a relatively small quantity of bits. For example, the region identifier may be represented by 8 bits. When the region identifier is transmitted between the terminal device and the network device, a relatively small quantity of communication resources may be occupied, and signaling overheads are low.

In addition, when there are a plurality of region identifiers, this application may be described in a manner of 'one region identifier + the quantity of regions', for example, {bw_x0, k0} or {bw_x0, k0+1}. There is no need to send a region identifier of each region in signaling, thereby further reducing signaling overheads.

In addition, in some embodiments, when the region in which the terminal device is located is the first region, after the terminal device learns of the region identifier of the first region, the terminal device further sends the region identifier of the first region to the network device, to replace precise location information of the terminal device, to assist location verification and service resource allocation on the network device side, thereby further reducing signaling overheads.

It should be noted that, in the service transmission scenario, this application can provide a region-level (that is, beam-position-level) communication resource configuration, so that the terminal device can perform service transmission based on the region-level (that is, beam-position-level) communication resource configuration. Compared with performing service transmission based on a cell in a related technology, this application can enable the terminal device to perform service transmission more flexibly.

Case 3: Beam management

A beam management scenario is described by using an example in which 'the first region is the region in which the terminal device is located'.

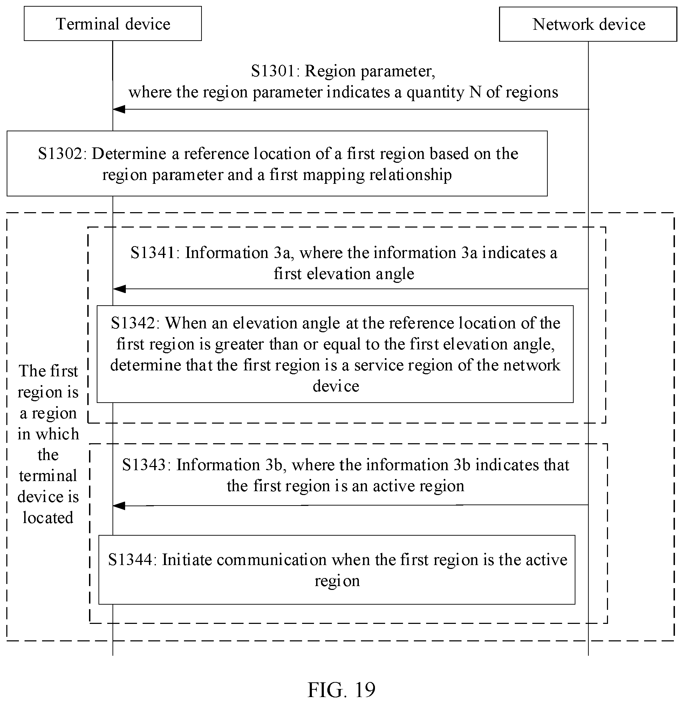

As shown in FIG. 19, the method further includes the following operations.

S1341: The network device sends information 3a to the terminal device. Correspondingly, the terminal device receives the information 3a from the network device.

The information 3a is described as follows:

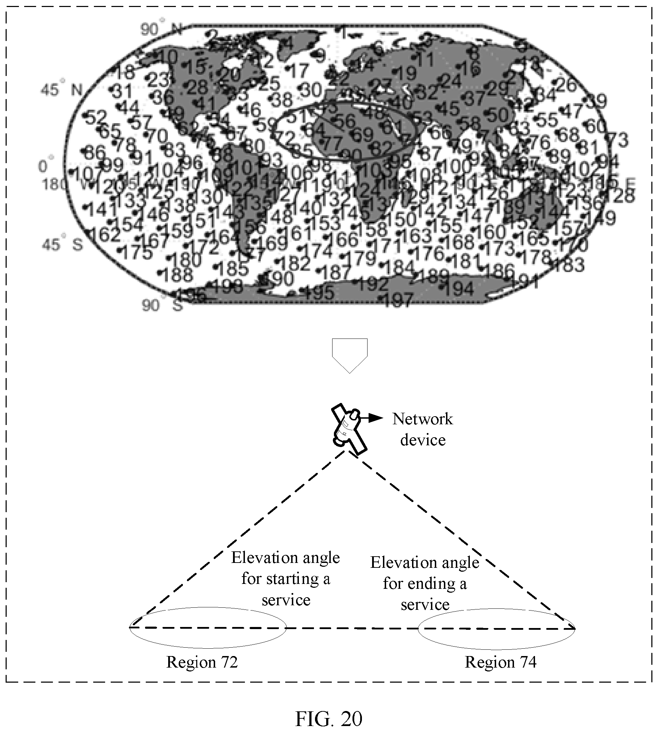

The information 3a indicates a first elevation angle. For example, the first elevation angle may be understood as an elevation angle for starting a service, as shown in FIG. 20.

In this application, the first elevation angle indicated by the information 3a may be understood as a threshold, which is a threshold used to determine whether a region is a service region of the network device.

It should be noted that, in this application, the elevation angle is described as follows: For a location on the earth, when a line of sight is above a horizontal line, an included angle between the line of sight and the horizontal line on a vertical plane on which the line of sight is located may be understood as the elevation angle.

An elevation angle at a location X may be understood as an included angle between a connection line between the location K and a location of the network device and a horizon line at the location K. A location that is above the location K and that the network device passes through may be described by using the elevation angle at the location K. For example, if the elevation angle at the location K is 90°, it indicates that the network device is located right above the location K.

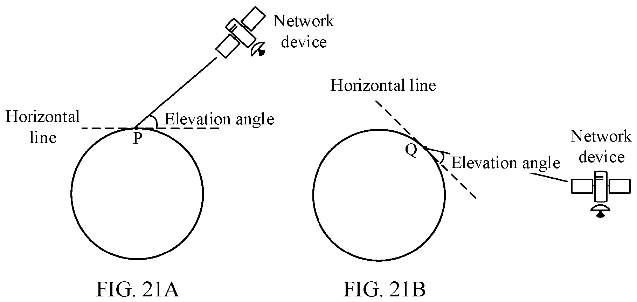

As shown in FIG. 21A, an elevation angle at a location P is shown. As shown in FIG. 21B, an elevation angle at a location Q is shown.

It should be noted that in this application, FIG. 20 is used as an example, and an elevation angle for starting a service may be understood as an elevation angle at a reference location of a region 72. An elevation angle for ending a service may be understood as an elevation angle at a reference location of a region 74.

S1342: When an elevation angle at the reference location of the first region is greater than or equal to the first elevation angle, the terminal device determines that the first region is a service region of the network device.

FIG. 20 is used as an example. When the first elevation angle is an elevation angle at a reference location of bw_72, if the first region is bw_64, because an elevation angle at a reference location of bw_64 is greater than the elevation angle at the reference location of bw_72, the terminal device determines that bw_64 is a service region of the network device.

It is easy to understand that, if the first elevation angle is understood as the elevation angle for ending a service, when the elevation angle at the reference location of the first region is less than or equal to the first elevation angle, the terminal device determines that the first region is a service region of the network device.

FIG. 20 is used as an example. When the first elevation angle is an elevation angle at a reference location of bw_74, if the first region is bw_64, because an elevation angle at a reference location of bw_64 is less than the elevation angle at the reference location of bw_74, the terminal device determines that bw_64 is a service region of the network device.

FIG. 20 is used as an example. Service regions of the network device include a region with a region identifier 69 and 11 regions near the region, as shown by solid-line ellipses.

S1343: The network device sends information 3b to the terminal device. Correspondingly, the terminal device receives the information 3b from the network device.

The information 3b is described as follows:
The information 3b indicates that the first region is an active region. The active region may be understood as an active region of the network device. For details, refer to descriptions in the term explanation part. Details are not described again.

Optionally, the information 3b is carried in one of the following: radio resource control (radio resource control, RRC) signaling, downlink control information (downlink control information, DCI) DCI, or a medium access control-control element (medium access control-control element, MAC-CE).

Optionally, the information 3b further indicates a time period in which the first region is the active region. For example, three regions are used as an example. In a time period 'moment 1 to moment 2', a region 1 is an active region; in a time period 'moment 2 to moment 3', a region 2 is an active region; and in a time period 'moment 3 to moment 4', a region 3 is an active region. If the first region is the region 1, the information 3b further indicates the time period 'moment 1 to moment 2'. If the first region is the region 2, the information 3b further indicates the time period 'moment 2 to moment 3'. If the first region is the region 3, the information 3b further indicates the time period 'moment 3 to moment 4'.

Optionally, a time period in which the first region is the active region is preconfigured. For example, three regions are used as an example. In a time period 'moment 1 to moment 2', a region 1 is an active region; in a time period 'moment 2 to moment 3', a region 2 is an active region; and in a time period 'moment 3 to moment 4', a region 3 is an active region. If the first region is the region 1, the information 3b is delivered at the moment 1. In other words, S1343 is performed at the moment 1. If the first region is the region 2, the information 3b is delivered at the moment 2. In other words, S1343 is performed at the moment 2. If the first region is the region 3, the information 3b is delivered at the moment 3. In other words, S1343 is performed at the moment 3.

It should be understood that, in this application, the first region is used as an example to describe the information 3b. Certainly, the information 3b may further indicate whether another region is an active region. For example, the information 3b indicates the following content by using a bitmap (bitmap): which region (regions) in a plurality of regions is an active region, and which region (regions) in the plurality of regions is not an active region.

For example, the RRC signaling carries the information 3b. In the case of FIG. 20, the information 3b may be denoted as {bw_69, 11}. {bw_69, 11} indicates that a region with a region identifier 69 and 11 regions near the region are all active regions.

For another example, the DCI or the MAC-CE carries the information 3b. In the case of FIG. 20, the information 3b may be in a form of a bitmap, for example, denoted as a 12-bit bitmap '100010010111'. '100010010111' may be understood as that in 12 regions, the 1st, 5th, 8th, 10th, 11th, and 12th regions are active regions. It is easy to understand that, when the information 3b further indicates a time period, for example, the information 3b further indicates a time period 'moment 1 to moment 2', it means that the 1st, 5th, 8th, 10th, 11th, and 12th regions are active regions in the time period 'moment 1 to moment 2'.

It should be noted that, in this application, an example in which the region radius R = 1000 km (in other words, the quantity N of regions = 197) is used for description. Correspondingly, the region identifier of each region may be represented by 8 bits, that is, bw_index = BIT_String(Size(8)).

It should be noted that, in this application, when the terminal device performs S1341, S1342, and S1343, it may be understood that the active region indicated by the information 3b belongs to the region determined in S1342. In other words, the information 3b indicates which region (regions) in the region determined in S1342 is the active region. That is, the terminal device determines the service region of the network device by using S1341 and S1342, and then determines the active region of the network device by using S1343. The active region of the network device is one or more of service regions of the network device.

It should be noted that, in this application, the terminal device may alternatively not perform S1341 and S1342, but perform S1343. In this case, it may be understood that the information 3b indicates which region (regions) is the active region. That is, the terminal device determines the active region of the network device by using S1343.

It should be noted that, in this application, the terminal device may alternatively perform S1341 and S1342, but not perform S1343. In this case, it may be understood that the terminal device determines the service region of the network device by using S1341 and S1342. The service region of the network device is an active region of the network device. In other words, each of service regions of the network device is an active region.

S1344: The terminal device initiates communication when the first region is the active region.

For example, when the first region is the active region, the terminal device performs cell measurement based on a synchronization signal and physical broadcast channel block measurement timing configuration (synchronization signal and physical broadcast channel block measurement timing configuration, SMTC). In this case, it may be understood that the region in beam management in case 3 is a broadcast region.

For another example, when the first region is the active region, the terminal device performs data transmission. In this case, it may be understood that the region in beam management in case 3 is a service region.

In this way, when the network device indicates an active region to the terminal device, the terminal device determines, based on whether the region in which the terminal device is located is an active region, whether to initiate communication, thereby reducing signaling overheads.

It should be noted that, in the beam management scenario, reduction of signaling overheads may be reflected as follows:

The region identifier in this application occupies a relatively small quantity of bits. For example, the region identifier may be represented by 8 bits. When the region identifier is transmitted between the terminal device and the network device, a relatively small quantity of communication resources may be occupied, and signaling overheads are low.

In addition, when there are a plurality of region identifiers, this application may be described in a manner of 'one region identifier + the quantity of regions', for example, {bw_x0, k0} or {bw_x0, k0+1}. There is no need to send a region identifier of each region in signaling, thereby further reducing signaling overheads.

It should be noted that, in the beam management scenario, the network device indicates an active region to the terminal device (for details, refer to the descriptions of the information 3b), or the network device provides, for the terminal device, information used to determine an active region (for details, refer to the descriptions of the information 3a), so that the terminal device can perform communication based on the active region (that is, an active beam position). Compared with performing communication based on dynamic beam indication information in a related technology, this application can enable the terminal device to reduce frequent measurement feedback in beam management, and reduce a communication delay.

Case 4: Mobility management

In case 4, for movement of the network device (for example, a satellite), a mobility management scenario is described by using an example in which 'the reference location of the first region is a reference point'.

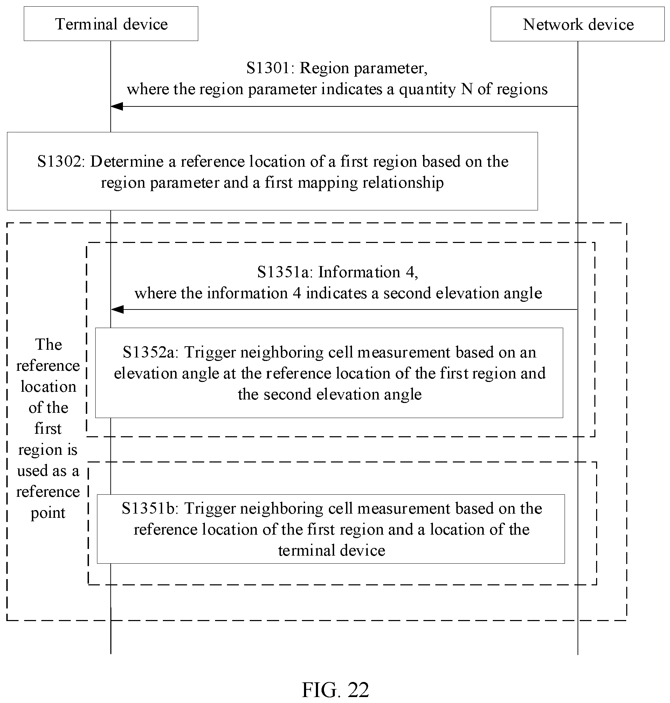

As shown in FIG. 22, the method further includes the following operations.

S1351a: The network device sends information 4 to the terminal device. Correspondingly, the terminal device receives the information 4 from the network device.

The information 4 is described as follows:

The information 4 indicates a second elevation angle.

S1352a: The terminal device triggers neighboring cell measurement based on an elevation angle at the reference location of the first region and the second elevation angle.

For example, the terminal device determines remaining service time based on the elevation angle at the reference location of the first region and the second elevation angle. If the remaining service time is less than (or equal to) a threshold X, neighboring cell measurement is triggered. On the contrary, if the remaining service time is greater than (or equal to) a threshold X, neighboring cell measurement is not triggered temporarily.

A neighboring cell measurement result is used for cell handover or cell reselection. For details, refer to a related technology. Details are not described herein.

It should be noted that, in this application, in an example, the network device sends a region identifier to the terminal device. Correspondingly, the terminal device receives the region identifier from the network device. For details, refer to the descriptions of S1302b. Details are not described again. The region identifier is a region identifier of the first region. This may be understood as that the network device indicates that the reference location of the first region is used as a reference point.

In this application, in another example, the terminal device obtains a location of the terminal device, and determines the reference location of the first region based on the location of the terminal device, the region parameter, and the first mapping relationship. For details, refer to the descriptions of S1302a. Details are not described again. In this case, it may be understood that the network device does not indicate a reference point to the terminal device, and the terminal device determines, based on the location of the terminal device, the region in which the terminal device is located, and uses a reference location of the region in which the terminal device is located as a reference point.

In this way, when the network device indicates the second elevation angle to the terminal device, if the reference location of the first region is a reference point (that is, the network device indicates, by using the region identifier, that the reference location of the first region is the reference point, or the first region is the region in which the terminal device is located), the terminal device determines, based on the elevation angle at the reference location of the first region and the second elevation angle, whether to trigger neighboring cell measurement, so that signaling overheads are low.

It should be noted that, in the mobility management scenario, for movement of the network device (for example, a satellite), reduction of signaling overheads may be reflected as follows:

The terminal device may quickly calculate a reference location (for example, the reference location of the first region) based on a region identifier (for example, a region identifier represented by 8 bits) configured by the network device. The network device only needs to deliver the region identifier, to replace conventional reference location information (generally, the reference location includes three-dimensional coordinates, and signaling overheads may reach 72 bits), so that signaling overheads are low.

It should be noted that in the mobility management scenario, the network device provides, for the terminal device, information (for example, the second elevation angle) used to determine whether to trigger neighboring cell measurement, so that the terminal device can determine, based on a region (that is, a beam position), whether to trigger neighboring cell measurement. Compared with triggering neighboring cell measurement based on a cell-level reference location in a related technology, this application can enable the terminal device to trigger neighboring cell measurement more flexibly.

In case 4, for movement of the terminal device, a mobility management scenario is described by using an example in which 'the reference location of the first region is a reference point'.

As shown in FIG. 22, the method further includes the following operations.

S1351b: The terminal device triggers neighboring cell measurement based on the reference location of the first region and a location of the terminal device.

For example, if a distance between the reference location of the first region and the location of the terminal device is greater than (or equal to) a threshold Y, neighboring cell measurement is triggered. On the contrary, if a distance between the reference location of the first region and the location of the terminal device is less than (or equal to) a threshold Y, neighboring cell measurement is not triggered temporarily. In this application, cell reselection is used as an example. The threshold Y may be understood as a reselection distance threshold. For example, a value of the threshold Y is k * region radius.

A neighboring cell measurement result is used for cell handover or cell reselection. For details, refer to a related technology. Details are not described herein.

It should be noted that, in this application, in an example, the network device sends a region identifier to the terminal device. Correspondingly, the terminal device receives the region identifier from the network device. For details, refer to the descriptions of S1302b. Details are not described again. The region identifier is a region identifier of the first region. This may be understood as that the network device indicates that the reference location of the first region is used as a reference point.

In this way, if the reference location of the first region is a reference point (that is, the network device indicates, by using the region identifier, that the reference location of the first region is the reference point), the terminal device determines, based on the reference location of the first region and the location of the terminal device, whether to trigger neighboring cell measurement, so that signaling overheads are low.

It should be noted that, in the mobility management scenario, for movement of the terminal device, reduction of signaling overheads may be reflected as follows:

The terminal device may quickly calculate a reference location (for example, the reference location of the first region) based on a region identifier (for example, a region identifier represented by 8 bits) configured by the network device. The network device only needs to deliver the region identifier, to replace conventional reference location information (generally, the reference location includes three-dimensional coordinates, and signaling overheads may reach 72 bits), so that signaling overheads are low.

It should be noted that in the mobility management scenario, the network device provides, for the terminal device, information (for example, the region identifier) used to determine whether to trigger neighboring cell measurement, so that the terminal device can determine, based on a region (that is, a beam position), whether to trigger neighboring cell measurement. Compared with triggering neighboring cell measurement based on a cell-level reference location in a related technology, this application can enable the terminal device to trigger neighboring cell measurement more flexibly.

It is easy to understand that, in scenario 4, when cell handover is triggered based on neighboring cell measurement, operations performed by a target network device (for example, a target satellite) and a source network device (for example, a source satellite) include the following:

The target network device (for example, the target satellite) includes a region identifier (that is, a beam position ID) in a physical downlink control channel (physical downlink control channel, PDCCH). The terminal device determines a closest region of the terminal device, and obtains information about the PDCCH based on a region identifier of the closest region. If the information is successfully obtained, access to the target network device (for example, the target satellite) is initiated on a resource indicated by the PDCCH. The resource indicated by the PDCCH includes one or more of the following: a target beam ID, an RO resource, a dedicated preamble, and the like. The target beam may be a beam corresponding to a handover-specific broadcast signal (handover synchronization signal block, HO-SSB).

The source network device (for example, the source satellite) includes different region identifiers (that is, beam position IDs) in a MAC-CE header. The terminal device determines the region in which the terminal device is located, and determines, based on a region identifier of the region, whether to receive the MAC-CE. If the MAC-CE is received, the terminal device accesses the target network device (for example, the target satellite) based on a device identifier (for example, a UE-ID) of the terminal device on a resource indicated by the MAC-CE. The resource indicated by the MAC-CE includes one or more of the following: an identifier of the target network device (for example, a target satellite ID), a target beam ID, an RO resource, a dedicated preamble, and the like.

It is easy to understand that, in scenario 4, an SMTC-offset of neighboring cell measurement may be determined based on a delay difference between a reference location (for example, the reference location of the first region) of a region corresponding to the reference point and different network devices (for example, satellites). For example, the delay difference may be obtained by dividing a distance difference between the different network devices (for example, satellites) and the reference location of the region corresponding to the reference point by the speed of light.

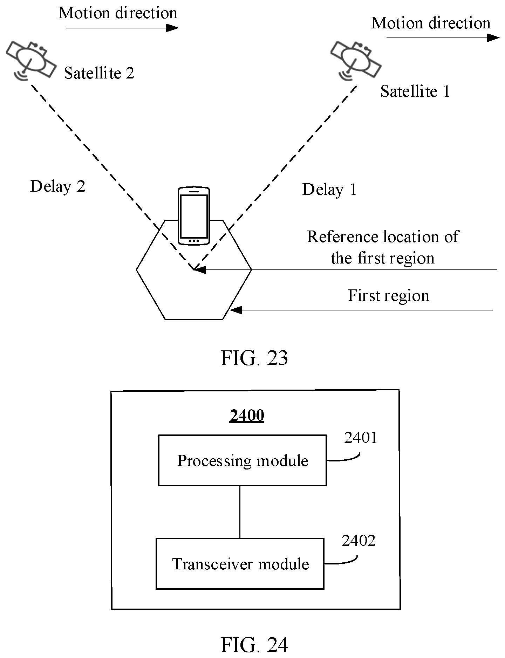

FIG. 23 is used as an example. A reference region is the region in which the terminal device is located, that is, the first region. Correspondingly, the reference point is the reference location of the first region. A delay 1 is obtained by dividing a distance between the reference location of the first region and a network device 1 (that is, a satellite 1) by the speed of light. A delay 2 is obtained by dividing a distance between the reference location of the second region and a network device 2 (that is, a satellite 2) by the speed of light. A delay difference between the terminal device and both the network device 1 and the network device 2 may be obtained based on the delay 1 and the delay 2. For example, the delay difference is a difference between the delay 1 and the delay 2.

It may be understood that, in the foregoing embodiments, the methods and/or steps implemented by the terminal device may be alternatively implemented by a component (for example, a processor, a chip, a chip system, a circuit, a logical module, or software) that may be used in the terminal device. The chip system may include a chip, or the chip system may include a chip and another discrete component.

It may be understood that, to implement the foregoing functions, the communication apparatus includes a corresponding hardware structure and/or software module for performing the functions. A person skilled in the art should be easily aware that, with reference to the example units and algorithm steps described in the embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module corresponding to each function may be obtained through division, or two or more functions may be integrated into one processing module. The integrated module may be implemented in a form of hardware, or may be implemented in a form of a software functional module. It should be noted that division into the modules in embodiments of this application is an example, and is merely logical function division. In actual implementation, there may be another division manner.

Optionally, FIG. 24 is a diagram of a structure of a communication apparatus 2400. The communication apparatus 2400 includes a processing module 2401 and a transceiver module 2402.

For example, the communication apparatus 2400 may be configured to implement a function of the foregoing terminal device.

In some embodiments, the communication apparatus 2400 may further include a storage module (not shown in FIG. 24), configured to store program instructions and data.

In some embodiments, the transceiver module 2402 may also be referred to as a transceiver unit, configured to implement a sending function and/or a receiving function. The transceiver module 2402 may include a transceiver circuit, a transceiver machine, a transceiver, or a communication interface.

In some embodiments, the transceiver module 2402 may include a receiving module and a sending module, respectively configured to perform receiving steps and sending steps performed by the terminal device in the foregoing method embodiments, and/or configured to support other processes of the technologies described in this specification. The processing module 2401 may be configured to perform processing (for example, determining) steps performed by the terminal device in the foregoing method embodiments, and/or configured to support other processes of the technologies described in this specification.

For example, when the communication apparatus 2400 is configured to implement a function of the foregoing terminal device,

the transceiver module 2402 is configured to receive a region parameter, where the region parameter indicates a quantity N of regions, and N is any positive integer; and
the processing module 2401 is configured to determine a reference location of a first region based on the region parameter and a first mapping relationship, the first mapping relationship indicates a conversion relationship between the reference location of the first region and the region parameter, and the first region is one of the N regions.

In some embodiments, the processing module 2401 is further configured to obtain a location of the terminal device.

That the processing module 2401 is configured to determine the reference location of the first region based on the region parameter and the first mapping relationship includes: determining the reference location of the first region based on the location of the terminal device, the region parameter, and the first mapping relationship. The first region is a region in which the terminal device is located.

In some embodiments, the processing module 2401 is further configured to obtain a region identifier.

That the processing module 2401 is configured to determine the reference location of the first region based on the region parameter and the first mapping relationship includes: determining the reference location of the first region based on the region identifier, the region parameter, and the first mapping relationship. The first region is a region corresponding to the region identifier.

In some embodiments, when the region is a broadcast region, and the first region is the region in which the terminal device is located,

the transceiver module 2402 is further configured to receive access information, where the access information includes an access configuration corresponding to the first region; and
the processing module 2401 is further configured to initiate random access based on the access configuration corresponding to the first region.

In some embodiments, when the region is a service region, and the first region is the region in which the terminal device is located,

the transceiver module 2402 is further configured to receive service resource information, where the service resource information indicates a communication resource configuration corresponding to the first region; and
the processing module 2401 is further configured to perform service transmission based on the communication resource configuration corresponding to the first region.

In some embodiments, when the first region is the region in which the terminal device is located,

the transceiver module 2402 is further configured to receive first information, where the first information indicates that the first region is an active region; and
the processing module 2401 is further configured to initiate communication based on the first information.

In some embodiments, before the first information is received,

the transceiver module 2402 is further configured to receive second information, where the second information indicates a first elevation angle; and
the processing module 2401 is further configured to: when an elevation angle at the reference location of the first region is greater than or equal to the first elevation angle, determine that the first region is a service region of a network device, where the active region is one or more of service regions of the network device.

In some embodiments, the transceiver module 2402 is further configured to receive third information. The third information indicates a second elevation angle.

The processing module 2401 is further configured to trigger neighboring cell measurement based on an elevation angle at the reference location of the first region and the second elevation angle. A result of the neighboring cell measurement is used for cell handover or cell reselection.

In some embodiments, the processing module 2401 is further configured to trigger neighboring cell measurement based on the reference location of the first region and a location of the terminal device. A result of the neighboring cell measurement is used for cell handover or cell reselection.

In some embodiments, when the region is a region corresponding to a tracking area, and the first region is the region in which the terminal device is located,

the transceiver module 2402 is further configured to receive fourth information, where the fourth information indicates at least one of the N regions; and
the processing module 2401 is further configured to initiate tracking area update when the at least one region does not include the first region.

In some embodiments, the processing module 2401 is further configured to obtain a first threshold.

The processing module 2401 is further configured to initiate tracking area update when a distance between a location of the terminal device and the reference location of the first region is greater than or equal to the first threshold.

For example, when the communication apparatus 2400 is configured to implement a function of the foregoing network device,

the processing module 2401 is configured to determine a region parameter, where the region parameter indicates a quantity N of regions, and N is any positive integer; and
the transceiver module 2402 is configured to send the region parameter, where the region parameter is used to determine a reference location of a first region, and the first region is one of the N regions.

In some embodiments, the transceiver module 2402 is further configured to send a region identifier. The region identifier is an identifier of the first region, and the region identifier is used to determine the reference location of the first region.

In some embodiments, the transceiver module 2402 is further configured to send access information. The access information includes an access configuration corresponding to the first region, and the access configuration corresponding to the first region is used to initiate random access.

In some embodiments, the transceiver module 2402 is further configured to send service resource information. The service resource information indicates a communication resource configuration corresponding to the first region, and the communication resource configuration corresponding to the first region is used to perform service transmission.

In some embodiments, the transceiver module 2402 is further configured to send first information, where the first information indicates that the first region is an active region.

In some embodiments, the transceiver module 2402 is further configured to send second information before sending the first information. The second information indicates a first elevation angle, the first elevation angle is used to determine whether the first region is a service region of the network device, and the active region is one or more of service regions of the network device.

In some embodiments, the transceiver module 2402 is further configured to send third information. The third information indicates a second elevation angle, the second elevation angle is used to determine whether to trigger neighboring cell measurement, and a result of the neighboring cell measurement is used for cell handover or cell reselection.

In some embodiments, the transceiver module 2402 is further configured to send fourth information. The fourth information indicates at least one of the N regions, and the fourth information is used to determine whether to initiate tracking area update.

In some embodiments, the transceiver module 2402 is further configured to send indication information of a first threshold, where the first threshold is used to determine whether to initiate tracking area update.

All related content of each step in the foregoing method embodiment may be cited to a function description of a corresponding functional module, and details are not described herein again.

In this application, the communication apparatus 2400 may be presented in a form of obtaining each functional module through division in an integrated manner. The "module" herein may be an application-specific integrated circuit (application-specific integrated circuit, ASIC), a circuit, a processor that executes one or more software or firmware programs and a memory, an integrated logic circuit, and/or another component that can provide the foregoing functions.

In some embodiments, when the communication apparatus 2400 in FIG. 24 is a chip or a chip system, the functions/implementation processes of the transceiver module 2402 may be implemented by an input/output interface (or a communication interface) of the chip or the chip system, and the functions/implementation processes of the processing module 2401 may be implemented by a processor (or a processing circuit) of the chip or the chip system.

Because the communication apparatus 2400 provided in this embodiment may perform the foregoing method, for technical effects that can be achieved, refer to the foregoing method embodiments. Details are not described herein again.

In a possible product form, the terminal device in embodiments of this application may be alternatively implemented by using the following: one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described throughout this application.

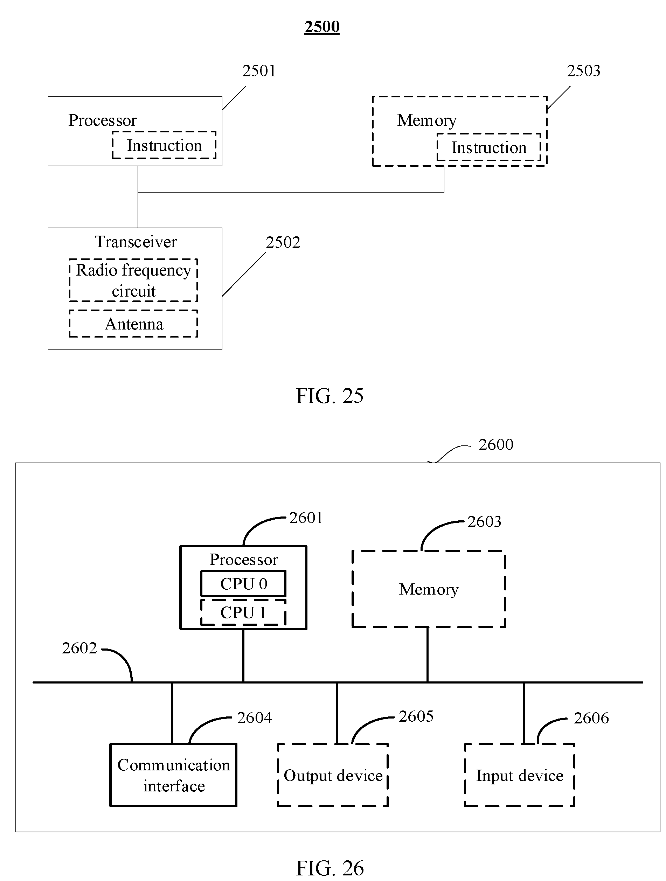

In another possible product form, the terminal device in embodiments of this application may be implemented by using a general bus architecture. For ease of description, refer to FIG. 25. FIG. 25 is a diagram of a structure of a communication apparatus 2500 according to an embodiment of this application. The communication apparatus 2500 includes a processor 2501 and a transceiver 2502. The communication apparatus 2500 may be a terminal device, or a chip or a chip system in the terminal device. FIG. 25 shows only main components of the communication apparatus 2500. In addition to the processor 2501 and the transceiver 2502, the communication apparatus may further include a memory 2503 and an input/output apparatus (not shown in the figure).

Optionally, the processor 2501 is mainly configured to process a communication protocol and communication data, control the entire communication apparatus, execute a software program, and process data of the software program. The memory 2503 is mainly configured to store the software program and data. The transceiver 2502 may include a radio frequency circuit and an antenna. The radio frequency circuit is mainly configured to: perform conversion between a baseband signal and a radio frequency signal, and process the radio frequency signal. The antenna is mainly configured to receive and send radio frequency signals in a form of electromagnetic waves. The input/output apparatus, such as a touchscreen, a display, or a keyboard, is mainly configured to: receive data input by a user and output data to the user.

Optionally, the processor 2501, the transceiver 2502, and the memory 2503 may be connected through a communication bus.

After the communication apparatus is powered on, the processor 2501 may read the software program in the memory 2503, explain and execute instructions of the software program, and process data of the software program. When data needs to be sent in a wireless manner, after performing baseband processing on the to-be-sent data, the processor 2501 outputs a baseband signal to the radio frequency circuit; and the radio frequency circuit performs radio frequency processing on the baseband signal and then sends the radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 2501. The processor 2501 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the communication apparatus 2400 may be in a form of the communication apparatus 2500 shown in FIG. 25.

In an example, functions/implementation processes of the processing module 2401 in FIG. 24 may be implemented by the processor 2501 in the communication apparatus 2500 shown in FIG. 25 by invoking the computer-executable instructions stored in the memory 2503. Functions/implementation processes of the transceiver module 2402 in FIG. 24 may be implemented by the transceiver 2502 in the communication apparatus 2500 shown in FIG. 25.

In another possible product form, the terminal device in this application may use a composition structure shown in FIG. 26, or include components shown in FIG. 26. FIG. 26 is a diagram of composition of a communication apparatus 2600 according to this application. The communication apparatus 2600 may be a terminal device, or a module, a chip, or a system on chip in the terminal device.

As shown in FIG. 26, the communication apparatus 2600 includes at least one processor 2601 and at least one communication interface (only an example in which one communication interface 2604 and one processor 2601 are included is used for description in FIG. 26). Optionally, the communication apparatus 2600 may further include a communication bus 2602 and a memory 2603.

The processor 2601 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 2601 may alternatively be another apparatus having a processing function, for example, a circuit, a component, or a software module. This is not limited.

The communication bus 2602 is configured to connect different components of the communication apparatus 2600, to enable communication between different components. The communication bus 2602 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one bold line is used for representation in FIG. 26, but this does not mean that there is only one bus or only one type of bus.

The communication interface 2604 is configured to communicate with another device or a communication network. For example, the communication interface 2604 may be a module, a circuit, a transceiver, or any apparatus that can implement communication. Optionally, the communication interface 2604 may alternatively be an input/output interface located in the processor 2601, and is configured to implement signal input and signal output of the processor.

The memory 2603 may be an apparatus with a storage function, and is configured to store instructions and/or data. The instructions may be a computer program.

For example, the memory 2603 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, or the like), a magnetic disk storage medium, or another magnetic storage device. This is not limited.

It should be noted that the memory 2603 may exist independently of the processor 2601, or may be integrated with the processor 2601. The memory 2603 may be located inside the communication apparatus 2600, or may be located outside the communication apparatus 2600. This is not limited. The processor 2601 may be configured to execute the instructions stored in the memory 2603, to implement a method provided in the following embodiments of this application.

In an optional implementation, the communication apparatus 2600 may further include an output device 2605 and an input device 2606. The output device 2605 communicates with the processor 2601, and may display information in a plurality of manners. For example, the output device 2605 may be a liquid crystal display (liquid crystal display, LCD), a light-emitting diode (light-emitting diode, LED) display device, a cathode ray tube (cathode ray tube, CRT) display device, or a projector (projector). The input device 2606 communicates with the processor 2601, and may receive an input from a user in a plurality of manners. For example, the input device 2606 may be a mouse, a keyboard, a touchscreen device, a sensing device, or the like.

In some embodiments, in hardware implementation, a person skilled in the art may figure out that the communication apparatus 2400 shown in FIG. 24 may be in a form of the communication apparatus 2600 shown in FIG. 26.

In an example, functions/implementation processes of the processing module 2401 in FIG. 24 may be implemented by the processor 2601 in the communication apparatus 2600 shown in FIG. 26 by invoking the computer-executable instructions stored in the memory 2603. Functions/implementation processes of the transceiver module 2402 in FIG. 24 may be implemented by the communication interface 2604 in the communication apparatus 2600 shown in FIG. 26.

It should be noted that the structure shown in FIG. 26 does not constitute a specific limitation on the terminal device. For example, in some other embodiments of this application, the terminal device may include more or fewer components than those shown in the figure, or combine some components, or split some components, or have different component arrangements. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In another possible implementation, the communication apparatus further includes a communication interface, and the communication interface is configured to communicate with a module outside the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or the instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatus, and unit, refer to a corresponding process in the foregoing method embodiments. Details are not described herein again.

It may be understood that the system, apparatus, and method described in this application may alternatively be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may be physically separated or not, this is, may be located in the same place or distributed on a plurality of network units. A component displayed as a unit may or may not be a physical unit. Some or all of the units may be selected according to an actual requirement to achieve the objectives of the solutions in the embodiments.

In addition, functional units in embodiments of this application may be integrated into one processing unit, or each unit may exist alone physically, or two or more units may be integrated into one unit.

All or some of the foregoing embodiments may be implemented by software, hardware, firmware, or any combination thereof. When a software program is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device such as a server or a data center that integrates one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatus.

Although this application is described with reference to embodiments, in a process of implementing this application that claims protection, a person skilled in the art may understand and implement another variation of the disclosed embodiments by viewing the accompanying drawings, disclosed content, and appended claims. In the claims, the word "comprising" (comprising) does not exclude another component or step, and "a" or "one" does not exclude a meaning of plurality. A single processor or another unit may implement several functions enumerated in the claims. Some measures are recorded in dependent claims that are different from each other, but this does not indicate that these measures cannot be combined to produce a better effect.

Although this application is described with reference to specific features and embodiments, it is clear that various modifications and combinations may be made to this application without departing from the scope of this application. Correspondingly, this specification and the accompanying drawings are merely example description of this application defined by the appended claims and are considered to cover any and all modifications, variations, combinations, or equivalents in the scope of this application. It is clear that a person skilled in the art may make various modifications and variations to this application without departing from the scope of this application. Thus, this application is intended to cover these modifications and variations, provided that they fall within the scope of the claims of this application and their equivalent technologies.

**Claims**

1. A communication method, applied to a terminal device, wherein the method comprises:

   receiving a region parameter, wherein the region parameter indicates a quantity N of regions, and N is any positive integer; and
   determining a reference location of a first region based on the region parameter and a first mapping relationship, wherein the first mapping relationship indicates a conversion relationship between the reference location of the first region and the region parameter, and the first region is one of the N regions.

2. The method according to claim 1, wherein the region parameter comprises a region radius or the quantity of regions.

3. The method according to claim 1 or 2, wherein the method further comprises:

   obtaining a location of the terminal device; and
   determining the reference location of the first region based on the region parameter and the first mapping relationship comprises:
   determining the reference location of the first region based on the location of the terminal device, the region parameter, and the first mapping relationship, wherein the first region is a region in which the terminal device is located.

4. The method according to claim 1 or 2, wherein the method further comprises:

   obtaining a region identifier; and
   determining the reference location of the first region based on the region parameter and the first mapping relationship comprises:
   determining the reference location of the first region based on the region identifier, the region parameter, and the first mapping relationship, wherein the first region is a region corresponding to the region identifier.

5. The method according to any one of claims 1 to 4, wherein
   the region comprises at least one of the following types:

   a broadcast region, wherein the broadcast region is a geographic region covered by a broadcast beam;
   a service region, wherein the service region is a geographic region covered by a service beam; or
   a region corresponding to a tracking area.

6. The method according to any one of claims 1 to 5, wherein

   the first mapping relationship satisfies:

   $$RL(i) = R_e \times (\cos \varphi_i \sin \theta_i, \sin \varphi_i \sin \theta_i, \cos \theta_i)$$

   $$\varphi_i = 2\pi \left[ \frac{2i}{1 + \sqrt{5}} \right]$$

   $$\theta_i = \cos^{-1} \left( 1 - \frac{2i + 1}{N_{spot}} \right)$$

   wherein $RL(i)$ represents three-dimensional coordinates corresponding to the reference location of the first region, $i$ represents the region identifier of the first region, $i$ is a nonnegative integer less than $N_{spot}$, $R_e$ represents a parameter of a spherical surface on which the first region is located, $N_{spot}$ represents the quantity of regions, and [ ] represents an operator for taking a fractional part.

7. The method according to any one of claims 1 to 5, wherein

   the first mapping relationship satisfies:

$$RL(i) = R_e \times \left( \sqrt{1 - z_i^2} \cos 2\pi i \, \emptyset, \sqrt{1 - z_i^2} \sin 2\pi i \, \emptyset, z_i \right)$$

$$z_i = \frac{2i - 1}{N_{spot}} - 1$$

$$\emptyset = \frac{1 + \sqrt{5}}{2}$$

wherein $RL(i)$ represents three-dimensional coordinates corresponding to the reference location of the first region, $i$ represents the region identifier of the first region, $i$ is a nonnegative integer less than $N_{spot}$, $R_e$ represents a parameter of a spherical surface on which the first region is located, and $N_{spot}$ represents the quantity of regions; or
the first mapping relationship satisfies:

$$RL(i) = (lon(i), lat(i))$$

$$lon(i) = \sin^{-1}\left(\frac{2i}{2N + 1}\right)$$

$$lat(i) = 2\pi i \emptyset^{-1}$$

$$N_{spot} = 2N + 1$$

$$\emptyset = \frac{1 + \sqrt{5}}{2}$$

wherein $RL(i)$ represents the reference location of the first region, $lon(i)$ represents a longitude corresponding to the reference location of the first region, $lat(i)$ represents a latitude corresponding to the reference location of the first region, $i$ represents the region identifier of the first region, $i$ is a nonnegative integer less than $N_{spot}$, and $N_{spot}$ represents the quantity of regions.

8. The method according to claim 5, wherein the region is the broadcast region, the first region is the region in which the terminal device is located, and the method further comprises:

   receiving access information, wherein the access information comprises an access configuration corresponding to the first region; and
   initiating random access based on the access configuration corresponding to the first region.

9. The method according to claim 5, wherein the region is the service region, the first region is the region in which the terminal device is located, and the method further comprises:

   receiving service resource information, wherein the service resource information indicates a communication resource configuration corresponding to the first region; and
   performing service transmission based on the communication resource configuration corresponding to the first region.

10. The method according to claim 3, wherein the first region is the region in which the terminal device is located, and the method further comprises:

    receiving first information, wherein the first information indicates that the first region is an active region; and
    initiating communication based on the first information.

11. The method according to claim 10, wherein before receiving the first information, the method further comprises:

receiving second information, wherein the second information indicates a first elevation angle; and
when an elevation angle at the reference location of the first region is greater than or equal to the first elevation angle, determining that the first region is a service region of a network device, wherein the active region is one or more of service regions of the network device.

12. The method according to claim 11, wherein
the first information is carried in one of the following: radio resource control RRC signaling, downlink control information DCI, or a medium access control-control element MAC-CE.

13. The method according to claim 11 or 12, wherein

the first information further indicates a time period in which the first region is the active region; or
a time period in which the first region is the active region is preconfigured.

14. The method according to claim 3 or 4, wherein the method further comprises:

receiving third information, wherein the third information indicates a second elevation angle; and
triggering neighboring cell measurement based on an elevation angle at the reference location of the first region and the second elevation angle, wherein a result of the neighboring cell measurement is used for cell handover or cell reselection.

15. The method according to claim 4, wherein the method further comprises:
triggering neighboring cell measurement based on the reference location of the first region and a location of the terminal device, wherein a result of the neighboring cell measurement is used for cell handover or cell reselection.

16. The method according to claim 5, wherein the region is the region corresponding to the tracking area, the first region is the region in which the terminal device is located, and the method further comprises:

receiving fourth information, wherein the fourth information indicates at least one of the N regions; and
initiating tracking area update when the at least one region does not comprise the first region.

17. The method according to claim 16, wherein

the fourth information comprises an identifier of each of the at least one region; or
the fourth information comprises an identifier of a second region and a first parameter, the second region is one of the at least one region, and the first parameter indicates a quantity of the at least one region.

18. The method according to claim 16 or 17, wherein
the region parameter is associated with fifth information, the fifth information indicates time within which the region parameter takes effect or a geographic region in which the region parameter takes effect, and the geographic region comprises the N regions.

19. The method according to claim 4, wherein the method further comprises:

obtaining a first threshold; and
initiating tracking area update when a distance between a location of the terminal device and the reference location of the first region is greater than or equal to the first threshold.

20. A communication method, applied to a network device, wherein the method comprises:

determining a region parameter, wherein the region parameter indicates a quantity N of regions, and N is any positive integer; and
sending the region parameter, wherein the region parameter is used to determine a reference location of a first region, and the first region is one of the N regions.

21. The method according to claim 20, wherein the region parameter comprises a region radius or the quantity of regions.

22. The method according to claim 20 or 21, wherein the method further comprises:

sending a region identifier, wherein
the region identifier is an identifier of the first region, and the region identifier is used to determine the reference location of the first region.

23. The method according to any one of claims 20 to 22, wherein
the region comprises at least one of the following types:

a broadcast region, wherein the broadcast region is a geographic region covered by a broadcast beam;
a service region, wherein the service region is a geographic region covered by a service beam; or
a region corresponding to a tracking area.

24. The method according to any one of claims 20 to 23, wherein the method further comprises:

sending access information, wherein
the access information comprises an access configuration corresponding to the first region, and the access configuration corresponding to the first region is used to initiate random access.

25. The method according to any one of claims 20 to 23, wherein the method further comprises:

sending service resource information, wherein
the service resource information indicates a communication resource configuration corresponding to the first region, and the communication resource configuration corresponding to the first region is used to perform service transmission.

26. The method according to any one of claims 20 to 23, wherein the method further comprises:
sending first information, wherein the first information indicates that the first region is an active region.

27. The method according to claim 26, wherein the first information is carried in one of the following: radio resource control RRC signaling, downlink control information DCI, or a medium access control-control element MAC-CE.

28. The method according to claim 26 or 27, wherein before sending the first information, the method further comprises:
sending second information, wherein
the second information indicates a first elevation angle, the first elevation angle is used to determine whether the first region is a service region of the network device, and the active region is one or more of service regions of the network device.

29. The method according to any one of claims 26 to 28, wherein

the first information further indicates a time period in which the first region is the active region; or
a time period in which the first region is the active region is preconfigured.

30. The method according to any one of claims 20 to 23, wherein the method further comprises:

sending third information, wherein
the third information indicates a second elevation angle, the second elevation angle is used to determine whether to trigger neighboring cell measurement, and a result of the neighboring cell measurement is used for cell handover or cell reselection.

31. The method according to any one of claims 20 to 23, wherein the method further comprises:

sending fourth information, wherein
the fourth information indicates at least one of the N regions, and the fourth information is used to determine whether to initiate tracking area update.

32. The method according to claim 31, wherein

the fourth information comprises an identifier of each of the at least one region; or
the fourth information comprises an identifier of a second region and a first parameter, the second region is one of the at least one region, and the first parameter indicates a quantity of the at least one region.

33. The method according to claim 31 or 32, wherein
the region parameter is associated with fifth information, the fifth information indicates time within which the region parameter takes effect or a geographic region in which the region parameter takes effect, and the geographic region comprises the N regions.

34. The method according to claim 20, wherein the method further comprises:
sending indication information of a first threshold, wherein the first threshold is used to determine whether to initiate tracking area update.

35. A communication apparatus, wherein the communication apparatus comprises a processor, and the processor is configured to run a computer program or instructions, to enable the communication apparatus to perform the method according to any one of claims 1 to 19, or to enable the communication apparatus to perform the method according to any one of claims 20 to 34.

36. A computer-readable storage medium, wherein the computer-readable storage medium stores computer instructions or a program, and when the computer instructions or the program is run on a computer, the method according to any one of claims 1 to 19 is performed, or the method according to any one of claims 20 to 34 is performed.

37. A computer program product, wherein the computer program product comprises computer instructions, and when a part or all of the computer instructions are run on a computer, the method according to any one of claims 1 to 19 is performed, or the method according to any one of claims 20 to 34 is performed.

38. A chip, comprising:

a memory, configured to store computer program instructions; and
a processor, configured to execute the computer program instructions, to enable a communication apparatus comprising the chip to perform the method according to any one of claims 1 to 19 or to enable a communication apparatus comprising the chip to perform the method according to any one of claims 20 to 34.

39. A communication system, comprising a terminal device and a network device, wherein the terminal device is configured to perform the method according to any one of claims 1 to 19, and the network device is configured to perform the method according to any one of claims 20 to 34.

FIG. 1

FIG. 2

FIG. 3

FIG. 4

FIG. 5

Earth-moving mode

FIG. 6A

Earth-fixed mode

FIG. 6B

EP 4 761 345 A1

Moment T1

FIG. 7A

Moment T2

FIG. 7B

FIG. 8A

FIG. 8B

Regular hexagon
with a smallest area

Regular hexagon
with a larger area

Regular hexagon
with a largest area

FIG. 9

FIG. 10

EP 4 761 345 A1

FIG. 11

Beam sweeping
for sending an SSB

Beam sweeping
for receiving the
RA preamble

An optimal SSB beam for a
network device to send a
signal is determined, and is
reused during signal
receiving

SSB
(PSS/SSS & PBCH)

Msg1
(RA preamble, including an
SSB measurement result)

Msg2 (RA response)

RRC setup request

RRC setup

RRC setup complete

Beam
sweeping
for receiving
the SSB

An optimal wide
beam for a terminal
device to receive a
signal is
determined, and is
reused during
signal sending

P1 process

Beam sweeping
for sending a
CSI-RS for BM

An optimal CSI-RS for
BM beam for the network
device to send a signal is
determined, and is reused
during signal receiving

RRC reconfiguration

CSI-RS for BM

CSI-RS for BM
beam measurement
report

Measure the
CSI-RS for BM

P2 process

Beam sweeping
for receiving the
CSI-RS for BM

An optimal narrow
beam for the terminal
device to receive a
signal is determined,
and is reused during
signal sending

P3 process

FIG. 12

EP 4 761 345 A1

<u>1300</u>

| Terminal device | | Network device |
|---|---|---|

S1301: Region parameter,
where the region parameter indicates a quantity N of regions

S1302: Determine a reference location of a first region based on the region parameter and a first mapping relationship, where the first mapping relationship indicates a conversion relationship between the reference location of the first region and the region parameter, and the first region is one of the N regions

FIG. 13

| Terminal device | | Network device |
|---|---|---|

S1301: Region parameter,
where the region parameter indicates a quantity N of regions

Example 2

S1303: Obtain a location of the terminal device

S1302a: Determine a reference location of a first region based on the location of the terminal device, the region parameter, and a first mapping relationship

Example 3

S1304: Obtain a region identifier

S1302b: Determine a reference location of a first region based on the region identifier, the region parameter, and a first mapping relationship

FIG. 14

Terminal device | Network device

S1301: Region parameter,
where the region parameter indicates a quantity N of regions

S1302: Determine a reference location of a first region based on
the region parameter and a first mapping relationship

The first region
is a region in
which the
terminal device
is located

S1311: Information 1,
where the information 1 indicates at least one region

S1312

The at least one region indicated by the information 1 does
not include the first region

Tracking area update procedure

FIG. 15

FIG. 16

FIG. 17

Terminal device

Network device

S1301: Region parameter,
where the region parameter indicates a quantity N of regions

S1302: Determine a reference location of a first region based on the
region parameter and a first mapping relationship

Broadcast
region

S1331a: Information 2a, where the information 2a indicates
an access configuration corresponding to the first region

Initiate random access based on the access configuration
corresponding to the first region

S1332a

Random access

The first
region is
a region
in which
the
terminal
device is
located

Service
region

S1331b: Information 2b, where the information 2b
indicates a communication resource configuration
corresponding to the first region

Perform service transmission based on the communication
resource configuration corresponding to the first region

S1332b

Service transmission

FIG. 18

```
┌─────────────────────┐                                      ┌────────────────────┐
│   Terminal device   │                                      │   Network device   │
└─────────────────────┘                                      └────────────────────┘
          │                                                             │
          │         S1301: Region parameter,                           │
          │ where the region parameter indicates a quantity N of regions│
          │◄────────────────────────────────────────────────────────── │
          │                                                             │
┌─────────┴───────────────────────────────────────────────────────┐   │
│  S1302: Determine a reference location of a first region based on the │
│      region parameter and a first mapping relationship            │   │
└─────────┬───────────────────────────────────────────────────────┘   │
```

S1341: Information 3a, where the information 3a indicates a first elevation angle

S1342: When an elevation angle at the reference location of the first region is greater than or equal to the first elevation angle, determine that the first region is a service region of the network device

The first region is a region in which the terminal device is located

S1343: Information 3b, where the information 3b indicates that the first region is an active region

S1344: Initiate communication when the first region is the active region

FIG. 19

FIG. 20

FIG. 21A

FIG. 21B

Terminal device

Network device

S1301: Region parameter,
where the region parameter indicates a quantity N of regions

S1302: Determine a reference location of a first region based on the
region parameter and a first mapping relationship

The reference location of the first region is used as a reference point

S1351a: Information 4,
where the information 4 indicates a second elevation angle

S1352a: Trigger neighboring cell measurement based on an
elevation angle at the reference location of the first region and
the second elevation angle

S1351b: Trigger neighboring cell measurement based on the
reference location of the first region and a location of the
terminal device

FIG. 22

Motion direction

Motion direction

Satellite 2

Satellite 1

Delay 2

Delay 1

Reference location of
the first region

First region

FIG. 23

2400

Processing module — 2401

Transceiver module — 2402

FIG. 24

<u>2500</u>

2501

Processor

Instruction

2503

Memory

Instruction

Transceiver

Radio frequency circuit

Antenna

2502

FIG. 25

2600

2601

Processor

CPU 0

CPU 1

2603

Memory

2602

2604

Communication interface

2605

Output device

2606

Input device

FIG. 26

## INTERNATIONAL SEARCH REPORT

| International application No. |
| --- |
| **PCT/CN2024/121531** |

| A. | CLASSIFICATION OF SUBJECT MATTER |
| --- | --- |
| | H04W28/06(2009.01)i |

According to International Patent Classification (IPC) or to both national classification and IPC

| B. | FIELDS SEARCHED |
| --- | --- |

Minimum documentation searched (classification system followed by classification symbols)

IPC: H04W, H04Q, H04L, H04M

Documentation searched other than minimum documentation to the extent that such documents are included in the fields searched

Electronic data base consulted during the international search (name of data base and, where practicable, search terms used)

DWPI, VEN, CNTXT, USTXT, WOTXT, CNABS, CNKI, 3GPP: 波束, 卫星, 通信, 覆盖, 区域, 子, 网格, 终端, 位置, satelite, beam, commmunication, coverage, area, sub, grid . UE, terminal, location

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 116074892 A (DATANG MOBILE COMMUNICATIONS EQUIPMENT CO., LTD.) 05 May 2023 (2023-05-05) description, paragraphs [0122]-[0168] | 1-5, 8-39 |
| A | CN 114424590 A (HUAWEI TECHNOLOGIES CO., LTD.) 29 April 2022 (2022-04-29) entire document | 1-39 |
| A | CN 113747366 A (BEIJING NOVSKY INFORMATION TECHNOLOGY CO., LTD.) 03 December 2021 (2021-12-03) entire document | 1-39 |
| A | CN 116250316 A (HUAWEI TECHNOLOGIES CO., LTD.) 09 June 2023 (2023-06-09) entire document | 1-39 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 December 2024** | **30 December 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/121531**

| Patent document cited in search report | | | Publication date (day/month/year) | Patent family member(s) | Publication date (day/month/year) |
|---|---|---|---|---|---|
| CN | 116074892 | A | 05 May 2023 | None | |
| CN | 114424590 | A | 29 April 2022 | None | |
| CN | 113747366 | A | 03 December 2021 | None | |
| CN | 116250316 | A | 09 June 2023 | None | |

Form PCT/ISA/210 (patent family annex) (July 2022)

**REFERENCES CITED IN THE DESCRIPTION**

**Patent documents cited in the description**

- CN 202311287423